(19)

Europäisches Patentamt

European Patent Office

Office européen des brevets

(11) **EP 4 130 902 A1**

(12) **EUROPÄISCHE PATENTANMELDUNG**

(43) Veröffentlichungstag:
**08.02.2023  Patentblatt 2023/06**

(21) Anmeldenummer: **21189898.6**

(22) Anmeldetag: **05.08.2021**

(51) Internationale Patentklassifikation (IPC):
***G05B 19/404*** (1995.01)

(52) Gemeinsame Patentklassifikation (CPC):
**B25J 9/1653; G05B 19/401; G05B 19/404;**
G05B 2219/40527; G05B 2219/41099

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder:
• **Forster, Gerhard
90592 Schwarzenbruck (DE)**
• **Klotzek, Andreas
91052 Erlangen (DE)**
• **Kubik, Alexander
91058 Erlangen (DE)**
• **Ladra, Uwe
91056 Erlangen (DE)**
• **Rost, Philipp
90768 Fürth (DE)**
• **Schäfers, Elmar
90763 Fürth (DE)**

(54) **IDENTIFIKATION VON MODELL-PARAMETERN FÜR EINE FERTIGUNGSMASCHINE SOWIE DEREN ANWENDUNG ZUM ERMITTELN OPTIMIERTER TRAJEKTORIEN**

(57)    Die Erfindung betrifft ein Verfahren zum Parametrieren eines Modells einer Fertigungsmaschine eines Fertigungsmaschinensystems, wobei die Fertigungsmaschine wenigstens eine Achse (X, Y, Z, A, B, C) mit einem lagegeregelten Antrieb aufweist, durch den wenigstens ein erstes Maschinenelement relativ zu einem zweiten Maschinenelement verstellbar ist, wobei einer von dem Fertigungsmaschinensystem umfassten Steuereinrichtung als Randbedingungen für eine Identifikationsfahrt ein maximaler Verfahrbereich sowie eine maximale Verfahrgeschwindigkeit für die Achse (X, Y, Z, A, B, C) und eine maximale, dem Antrieb der Achse (X, Y, Z, A, B, C) zuführbare elektrische Leistung hinterlegt sind. Dabei werden mittels der Steuereinrichtung folgende Schritte ausgeführt:
- Bestimmen oder Empfangen einer maximalen Beschleunigung und/oder eines maximalen Rucks für die Identifikationsfahrt,
- Bestimmen eines Fahrprofils für die Identifikationsfahrt unter Einhaltung der Randbedingungen sowie der maximalen Beschleunigung und des maximalen Rucks für die Identifikationsfahrt,
- Durchführen der Identifikationsfahrt gemäß dem ermittelten Fahrprofil,
- Ermitteln des dem Antrieb während der Identifikationsfahrt zugeführten Stroms (I),
- Ermitteln einer Strom- und/oder einer Drehmomentgrenze des Antriebs in Abhängigkeit einer Drehzahl des Antriebs,
- Ermitteln wenigstens einer Kinematik-Istgröße während der Identifikationsfahrt,

- Ermitteln wenigstens eines Modell-Parameters wenigstens eines Modells der Achse in Abhängigkeit des ermittelten Stroms (I) sowie der Kinematik-Istgröße,
- Ermitteln wenigstens einer in Bezug auf eine minimale Fahrzeit oder eine maximale Beschleunigung oder eine minimale Verlustenergie optimierten Trajektorie der Achse (X, Y, Z, A, B, C) auf Basis des Modells.

FIG 1

**Beschreibung**

Die Erfindung betrifft ein Verfahren zum Betrieb einer Fertigungsmaschine eines Fertigungsmaschinensystems, wobei die Fertigungsmaschine wenigstens eine Achse mit einem lagegeregelten Antrieb aufweist, durch den wenigstens ein erstes Maschinenelement relativ zu einem zweiten Maschinenelement verstellbar ist, wobei einer von dem Fertigungsmaschinensystem umfassten Steuereinrichtung als Randbedingungen für mindestens eine Identifikationsfahrt wenigstens ein maximaler Verfahrbereich sowie eine maximale Verfahrgeschwindigkeit für die Achse und eine maximale, dem Antrieb der Achse zuführbare elektrische Leistung hinterlegt sind.

Die konventionelle Auslegung von Maschinenachsen erfolgt gewöhnlich in der Planungs- bzw. Auslegungsphase mittels entsprechenden Software-Tools, also noch bevor die Maschine gebaut wird. Viele Parameter der Maschinenachsen bzw. deren lagegeregelter Antriebe, wie z.B. Reibung, sind im Vorfeld nicht bekannt und können höchstens mit einem großen Sicherheitsfaktor abgeschätzt werden. Das hat zur Folge, dass nach der Inbetriebnahme beim Verfahren der Maschinenachsen nicht die optimal mögliche Verfahrbewegung, z.B. in minimaler Zeit oder an der möglichen Drehmomentgrenze, erreicht wird.

Ist die Maschine aufgestellt und in Betrieb genommen, so werden heute die Parameter der Antriebsachsen in einem iterativen Prozess manuell eingestellt. Diese Vorgehensweise ist zeit- und kostenintensiv. Ein erfahrener Inbetriebnehmer gelangt dabei meistens in den Bereich des Optimums, jedoch ist dieses Verfahren sehr subjektiv und die Einstellungen können sich auch von Inbetriebnehmer zu Inbetriebnehmer unterscheiden.

Aus der Druckschrift EP 3 176 657 A1 ist eine Werkzeug- oder Produktionsmaschine, bei der die Steifigkeit eines Antriebsstranges zur linearen Bewegung einer Maschinenkomponente entlang einer Linearführung der Maschine ermittelt wird. Dabei umfasst der Antriebsstrang einen Motor mit einem Motormesssystem und der Linearführung ist ein Längenmesssystem zur Bestimmung der Position der Maschinenkomponente zugeordnet, wobei die Maschine ferner eine numerische Steuerung zur Regelung der Bewegung der Maschinenkomponente umfasst. Die Steifigkeit des Antriebsstranges wird dadurch bestimmt, dass der Maschinenkomponente eine konstante Beschleunigung mittels der numerischen Steuerung vorgegeben wird, eine Differenz zwischen einer aus dem Motormesssystem abgeleiteten Position der Maschinenkomponente und einer zeitgleich durch das Längenmesssystem gemessenen Position der Maschinenkomponente während der Beschleunigungsphase mittels der numerischen Steuerung bestimmt wird und die Differenz zu der Beschleunigung oder einer für die Beschleunigung erforderlichen Kraft zugeordnet wird und das so ermittelten Wertepaar und/oder ein aus dem Wertepaar hervorgehender Steifigkeitswert in der numerischen Steuerung gespeichert wird.

Aufgabe der Erfindung ist es, die Inbetriebnahme einer Fertigungsmaschine, die wenigstens eine Achse mit einem lagegeregelten Antrieb aufweist, zu vereinfachen.

Diese Aufgabe wird gelöst durch ein Verfahren mit den in Patentanspruch 1 angegebenen Verfahrensschritten, also ein Verfahren zum Betrieb einer Fertigungsmaschine eines Fertigungsmaschinensystems, wobei die Fertigungsmaschine wenigstens eine Achse mit einem lagegeregelten Antrieb aufweist, durch den wenigstens ein erstes Maschinenelement relativ zu einem zweiten Maschinenelement verstellbar ist, wobei einer von dem Fertigungsmaschinensystem umfassten Steuereinrichtung als Randbedingungen für mindestens eine Identifikationsfahrt wenigstens ein maximaler Verfahrbereich sowie eine maximale Verfahrgeschwindigkeit für die Achse und eine maximale, dem Antrieb der Achse zuführbare elektrische Leistung hinterlegt sind,

wobei mittels der Steuereinrichtung folgende Schritte ausgeführt werden:

- Bestimmen oder Empfangen einer maximalen Beschleunigung und/oder eines maximalen Rucks für die Identifikationsfahrt,
- Bestimmen eines Fahrprofils für die Identifikationsfahrt unter Einhaltung der Randbedingungen sowie der maximalen Beschleunigung und des maximalen Rucks für die Identifikationsfahrt,
- Durchführen der Identifikationsfahrt gemäß dem ermittelten Fahrprofil,
- Ermitteln des dem Antrieb während der Identifikationsfahrt zugeführten Stroms,
- Ermitteln einer Strom- und/oder einer Drehmomentgrenze des Antriebs in Abhängigkeit einer Drehzahl des Antriebs,
- Ermitteln wenigstens einer Kinematik-Istgröße während der Identifikationsfahrt,
- Ermitteln wenigstens eines Modell-Parameters wenigstens eines Modells der Achse in Abhängigkeit des ermittelten Stroms sowie der Kinematik-Istgröße,
- Ermitteln wenigstens einer in Bezug auf eine minimale Fahrzeit oder eine maximale Beschleunigung oder eine minimale Verlustenergie optimierten Trajektorie der Achse auf Basis des Modells.

Die Aufgabe wird ferner gelöst durch ein Fertigungsmaschinensystem mit einer Fertigungsmaschine und einer damit verbundenen Steuereinrichtung zur Durchführung eines derartigen Verfahrens. Dabei umfasst die Steuereinrichtung insbesondere eine geeignete Software, sodass in Folge eines Aufrufs dieser Software die genannten Schritte mittels der Steuereinrichtung ausgeführt werden.

Die Erfindung betrifft ebenfalls eine Fertigungsmaschine für ein derartiges Fertigungsmaschinensystem.

Die Erfindung betrifft weiterhin eine Steuereinrichtung für ein derartiges Fertigungsmaschinensystem.

Darüber hinaus betrifft die Erfindung einen digitalen Zwilling einer Fertigungsmaschine eines derartigen Fertigungsmaschinensystems.

Unter einer Fertigungsmaschine versteht der Fachmann eine zum Zweck einer automatisierten Fertigung eingesetzte Maschine. Darunter fallen insbesondere Produktionsmaschinen, Werkzeugmaschinen oder Roboter. Eine im Zusammenhang mit der Erfindung verwendete Fertigungsmaschine umfasst zumindest eine lagegeregelte Achse, so dass mittels eines der Achse zugeordneten, legegeregelten Antriebs wenigstens ein erstes, direkt mit dem Antrieb verbundenes Maschinenelement relativ zu einem zweiten (weiteren) Maschinenelement der Fertigungsmaschine verstellbar ist.

Vorzugsweise umfasst eine Fertigungsmaschine eines erfindungsgemäßen Fertigungsmaschinensystems, z.B. eine Werkzeugmaschine oder ein Roboter, mehr als eine, insbesondere wenigstens fünf legegeregelte Achsen, mittels der ein Endeffektor, z.B. ein Werkzeug, im Raum positioniert und orientiert werden kann.

Das Fertigungsmaschinensystem umfasst neben der Fertigungsmaschine eine damit verbundene Steuereinrichtung, die für die Lageregelung der Achse gemäß einem Programm (Steuerprogramm) sorgt.

Werkzeugmaschinen oder Roboter werden heutzutage beispielsweise mit Hilfe einer Steuereinrichtung in Form einer CNC-Steuerung gesteuert. Dabei "steuert" die Steuereinrichtung anhand eines Teileprogramms die Bewegungen von Maschinenelementen und damit die Bewegungen eines Werkzeuges, welches beispielsweise über eine Werkzeughaltevorrichtung in die Maschine eingebracht wird, relativ zu einem Werkstück, welches ebenfalls in die Maschine eingebracht wird. Dabei ist dem Fachmann klar, dass es sich bei dem Begriff "steuern" um den üblichen Sprachgebrauch und nicht um "steuern" im Sinne der Regelungstechnik handelt. "Steuern" meint hier vor allem die Lageregelung von Achsen, wohinter sich Regelungsvorgänge im Sinne der Regelungstechnik verbergen.

Das Teileprogramm setzt sich dabei zumindest überwiegend aus Steuerbefehlen zusammen, die von der Steuereinrichtung eingelesen und interpretiert werden. Entsprechend den Steuerbefehlen steuert die Steuereinrichtung die Bewegungen der Maschinenelemente der Werkzeugmaschine und damit die Bewegung des Werkzeugs relativ zu dem Werkstück.

Zur Erstellung eines Teileprogramms werden dabei von einem CAM-System (Computer Aided Manufacturing) vorzugsweise in einem standardisierten Datenformat Bewegungsinformationen über durchzuführende Bewegungen des Werkzeugs erzeugt und von einem nachgeschalteten Postprozessor eingelesen. Der Postprozessor erzeugt anhand der vom CAM-System erzeugten Bewegungsinformationen, den Kinematik- und Maschinendaten der Werkzeugmaschine sowie dem Befehlssatz der CNC-Steuerung und dem Befehlssatz der PLC-Steuerung, ein für die jeweilige konkrete Werkzeugmaschine auf denen der Bearbeitungsvorgang stattfinden soll angepasstes Teileprogramm in Form von auf die konkrete Steuereinrichtung der Werkzeugmaschine angepassten Steuerbefehlen. Solchermaßen werden vom Postprozessor die vom CAM-System vorzugsweise in einem standardisierten Datenformat erzeugten Bewegungsinformationen in Steuerbefehle, die von der Steuereinrichtung eingelesen werden können und auf die jeweilige Steuereinrichtung angepasst sind, umgesetzt.

Der Postprozessor berücksichtigt dabei neben dem konkret verfügbaren CNC-Befehlssatz die konkreten maschinenspezifischen Gegebenheiten der Werkzeugmaschine, wie z.B. Kinematik, geometrische Größenverhältnisse, maximale Verfahrbereiche der Antriebsachsen und Maximalgeschwindigkeiten der Maschinenelemente. Diese Daten liegen in Form von Maschinendaten vor. Weiterhin werden vom Postprozessor bei der Erzeugung der Steuerbefehle maschinenspezifische PLC-Funktionalitäten (Programmable Logic Control), wie z.B. Schmierung, Werkzeugwechsel, Türverriegelung etc. berücksichtigt, wobei die konkret verfügbaren PLC-Funktionalitäten in Form von PLC-Befehlssätzen dem Postprozessor zur Verfügung stehen.

Damit die mit der Fertigungsmaschine verbundene Steuereinrichtung die von der Fertigungsmaschine auszuführenden Bewegungen sehr genau planen und steuern kann, muss in der Steuereinrichtung ein exaktes Modell der Fertigungsmaschine, welches die mechanischen und dynamischen Eigenschaften der Maschine sehr genau abbildet, in der Steuereinrichtung hinterlegt sein.

In dieser Anmeldung wird eine Methodik beschrieben, wie an einer existierenden Maschine mit einem Identifikationsvorgang die notwendigen mechanischen und elektrischen Parameter der Antriebsachse messtechnisch ermittelt werden, wobei zunächst unter Einhaltung vorbestimmter Randbedingungen der Antriebsachsen die Dynamik-Parameter für eine sichere Identifikationsfahrt der jeweiligen Achse ermittelt werden.

Im Unterschied zu der oben beschriebenen Vorgehensweise, bei der die von der Maschine im Betrieb auszuführenden Bewegungen in der Regel durch ein externes CAM-System bestimmt werden, werden hier die Trajektorien für die Identifikationsfahrten der einzelnen Achsen direkt an der Steuereinrichtung der Maschine bestimmt. Dies geschieht vorzugsweise mittels einer auf der Steuereinrichtung installierten Software, die den Bediener über eine grafische Bedieneroberfläche der Steuereinrichtung Schritt für Schritt durch die Inbetriebnahme führt.

Zur Inbetriebnahme der Fertigungsmaschine wird demnach zunächst eine Identifikationsfahrt durchgeführt. Dies bedeutet, dass die Achse (bzw. die Achsen) der Maschine unter Einhaltung von vorgegebenen oder vorgebbaren Randbedingungen verfahren wird und dabei Messwerte erzeugt und ausgewertet werden, woraus sich die Modell-Parameter ergeben, die die Steuerung benötigt, um optimierte Trajektorien für den laufenden Betrieb der Maschine, also nach der Inbetriebnahme, bestimmen zu können.

Gewöhnlich umfasst eine Fertigungsmaschine mehrere lagegeregelte Achsen, nachfolgend auch als Antriebsachsen bezeichnet, mittels derer ein Endeffektor der Maschine in einem Arbeitsraum der Maschine positionierbar ist. Ziel der Erfindung ist es, die benötigten Modell-Parameter für alle Antriebsachsen der Maschine zu ermitteln. Dabei können in einem Identifikationsvorgang wenigstens eine Identifikationsfahrt für jede einzelne Achse ermittelt und durchgeführt werden. Die Achsen werden demnach einzeln nacheinander verfahren. Es ist jedoch auch möglich, in einem Identifikationsvorgang mehrere, insbesondere alle Antriebsachsen der Maschine gleichzeitig zu verfahren, so dass Identifikationsfahrten einzelner Achsen zeitgleich ausgeführt werden.

Aus bekannten Randbedingungen der jeweiligen Achse, insbesondere aller Antriebsachsen, werden zunächst Parameter für einen sicheren Identifikationsvorgang, das heißt sichere Identifikationsfahrten ermittelt. Diese Randbedingungen umfassen wenigstens die Positionen der Endschalter der Achsen, die den maximalen Verfahrbereich der jeweiligen Achse definieren. Weiterhin ist aus den Antriebsdaten der betreffenden Achse, wie beispielsweise einer maximalen Motordrehzahl in Verbindung mit einer bestimmten Übersetzung, die maximale (Verfahr) Geschwindigkeit der betreffenden Achse gegeben.

Für eine sichere Identifikationsfahrt bedarf es weiterhin zumindest einer groben Kenntnis der Trägheit der Achse sowie von Umrichter-Parametern. Die Umrichter-Parameter können den Maximalstrom des Umrichters, den Maximalstrom des Motors oder das maximal zulässige Drehmoment des Motors umfassen. Letzteres kann beispielsweise vom Maschinenhersteller definiert werden, z.B. aus einem maximal zulässigen Drehmoment eines Getriebes im Antriebsstrang. Diese Daten liegen in der Regel im Umrichter vor und können aus diesem über vorhandene Schnittstellen ausgelesen und auf die Steuereinrichtung übertragen werden. Für die Trägheit der Achse, insbesondere das dem Antrieb der Achse entgegengebrachte Trägheitsmoment, reicht eine verhältnismäßig grobe Abschätzung. Diese kann beispielsweise aus den bekannten, mittels der Achse bewegten Massen gewonnen werden. Liegen derartige Daten in der Steuereinrichtung vor, so kann diese selbst Werte für eine maximalen Beschleunigung und/oder einen maximalen Ruck für die Identifikationsfahrt bestimmen. Ferner ist es möglich, dass die Steuereinrichtung die Trägheit für jede Achse mittels einer kurzen "Testfahrt" bestimmt, in der die Achse für einen kurzen Zeitraum und für eine kurze Fahrstrecke testweise beschleunigt wird. Für diese Testfahrt kann beispielsweise eine verhältnismäßig niedrige, von der Achse sicher ausführbare Beschleunigung in der Steuereinrichtung hinterlegt sein, z.B. $a_{test}$ = 1,0 m/s$^2$. Weiterhin ist es möglich, dass der Bediener an der Maschine aufgrund seiner Fachkenntnis eine Erstschätzung der Trägheit der Achse oder gleich eine Erstschätzung für geeignete Werte für die maximale Beschleunigung bzw. den maximalen Ruck für die Identifikationsfahrt vornimmt und die entsprechenden Werte direkt manuell in die Steuereinrichtung eingibt, wodurch diese die entsprechenden Werte empfängt. Wird der Steuereinrichtung eine Erstschätzung der Trägheit vorgegeben, so kann diese daraus selbsttätig in Verbindung mit den Antriebsdaten geeignete Werte für eine maximalen Beschleunigung und/oder einen maximalen Ruck für die Identifikationsfahrt bestimmen.

Unabhängig davon, auf welchem der aufgezeigten Wege geeignete Werte für eine maximalen Beschleunigung und/oder einen maximalen Ruck für die Identifikationsfahrt bestimmt bzw. der Steuereinrichtung zugeführt wurden, sollten diese Werte mit einem hohen "Sicherheitsfaktor" versehen sein, z.B. 50% der voraussichtlichen Werte dieser Parameter für den realen Betrieb der Maschine nicht übersteigen. Der Sicherheitsabstand ist erforderlich, weil die Reibung nicht bekannt ist und weiterhin die die bei hoher Drehzahl des Motors wirksam werdende Feldschwächung das verfügbare Drehmoment reduziert. Die reduzierende Wirkung der Feldschwächung über der Drehzahl des Motors kann ebenso wie die Reibung nicht ohne Messung hinreichend genau vorgegeben werden, beeinflusst aber offensichtlich das Beschleunigungsvermögen.

Die Parameter maximaler Verfahrweg, maximale Geschwindigkeit, maximale Beschleunigung und maximaler Ruck für die Identifikationsfahrt werden für jede Antriebsachse so bestimmt, dass damit eine sichere Identifikationsfahrt gewährleistet wird. Da die maximale Beschleunigung (maximal mögliche Beschleunigung der Achse) noch nicht bekannt ist, wird ein sicherer aber ausreichend hoher Initialwert, das heißt die maximale Beschleunigung für die Identifikationsfahrt, aus den bekannten Motordaten ermittelt, insbesondere geschätzt, und benutzt. Ebenso wird für die Identifikationsfahrt ein maximaler Ruck vorgegeben, insbesondere aus den Motordaten ermittelt oder geschätzt, der von dem Antrieb der Achse mit hoher (an Sicherheit grenzender) Wahrscheinlichkeit erreicht werden kann. Vorteilhaft werden die genannten Initialwerte aus den vorliegenden Motor- und Umrichterdaten automatisch durch die genannte Software bestimmt.

Unter Einhaltung der Randbedingungen sowie der maximalen Beschleunigung und des maximalen Rucks für die Identifikationsfahrt wird sodann ein Fahrprofil für die Identifikationsfahrt bestimmt. Vorzugsweise erfolgt auch dieser Schritt automatisch mittels der genannten Software.

Die Identifikation läuft dann anhand der ermittelten Parameter automatisch ab und erfolgt typischerweise in zwei Identifikationsfahrten (Messfahrten) mit unterschiedlichen Fahrprofilen für jede Antriebsachse, einmal mit mittlerer Geschwindigkeit und/oder mittlerer Beschleunigung sowie einmal mit hoher Geschwindigkeit und/oder hoher Beschleunigung, um alle möglichen Arbeitsbereiche der Maschinenachsen abzudecken und gute Modelle zu erhalten. Die Identifikation dauert nur wenige Minuten und liefert ein sehr gutes Abbild der realen Maschinenachsen. Vorzugsweise ist das Fahrprofil für jede Achse so bestimmt, dass die Achse einmal in einer ersten Achsrichtung, z.B. der positiven Achsrichtung, mit der mittlerer Geschwindigkeit und mittlerer Beschleunigung verfahren wird und anschließend in der entgegengesetzten Achsrichtung, z.B. der negativen Achsrichtung, mit der hohen Geschwindigkeit und hohen Beschleunigung verfahren wird. Vorzugsweise wird die Achse dabei zumindest über einen wesentlichen Bereich ihres maximalen Verfahrweges verfahren.

Während der Identifikationsfahrt wird wenigstens zu einem bestimmten Zeitpunkt wenigstens ein Stromwert gemessen und aufgezeichnet. In der Regel werden während der Identifikationsfahrt jedoch mehrere, insbesondere eine Vielzahl an Stromwerten, insbesondere in Abhängigkeit der Zeit, gemessen und aufgezeichnet.

Neben dem Strom werden für die Ermittlung zumindest einiger der Modell-Parameter noch wenigstens eine Kinematik-Istgröße benötigt. Darunter sind die Position oder die Geschwindigkeit oder die Beschleunigung oder der Ruck der Achse während der Identifikationsfahrt zu verstehen. Diese Größen können auf unterschiedliche Weise ermittelt werden.

Einerseits können diese Größen aus dem vorgegebenen Fahrprofil der Identifikationsfahrt direkt aus den Vorgaben der Steuerung, z.B. den Lagesollwerten der Achse, entnommen und als gegeben betrachtet werden.

Sicherer ist es jedoch, zumindest die Position der Achse in Abhängigkeit der Zeit während der Identifikationsfahrt ebenfalls messtechnisch zu ermitteln. Vorteilhaft erfolgen auch hierbei eine Vielzahl an Messungen, vorzugsweise zumindest näherungsweise zu denselben Zeitpunkten, zu denen auch der Strom gemessen wird.

Bei der Bestimmung der Größen Position, Geschwindigkeit, Beschleunigung oder Ruck ist es ausreichend, lediglich den Verlauf der Position in Abhängigkeit der Zeit zu kennen. Die Größen Geschwindigkeit, Beschleunigung oder Ruck können daraus mittels der ersten bzw. zweiten Ableitung auf mathematischem Weg errechnet werden. Alternativ ist es jedoch auch möglich, zumindest eine der Größen Geschwindigkeit, Beschleunigung oder Ruck durch entsprechende Sensoren messtechnisch zu erfassen.

Während der Identifikationsfahrt wird vorteilhaft die Stromaufnahme des Antriebs der Achse in bestimmten zeitlichen Abständen, beispielsweise alle 2 ms, bestimmt. Ferner wird für den Zeitpunkt der jeweiligen Messung die Motordrehzahl bestimmt. Die Motordrehzahl zum jeweiligen Zeitpunkt kann entweder aus dem Umrichter ausgelesen oder aus den ermittelten Positionswerten berechnet werden.

Besonders interessant im Zusammenhang mit der Erfindung sind die Stromwerte, insbesondere der Drehmoment bildende Strom, bzw. das Drehmoment in Abhängigkeit der Motordrehzahl. Insbesondere wird eine Drehmoment- bzw. Stromkennlinie in Abhängigkeit der Motordrehzahl bestimmt. Bei den verwendeten Motoren ist der Zusammenhang zwischen Strom und Drehmoment in der Regel genau bekannt. Die Werte können daher in einfacher Weise ineinander überführt werden. Insbesondere besteht in dem für die Identifikationsfahrt relevanten Betriebsbereich des Motors ein wenigstens im Wesentlichen linearer Zusammenhang zwischen dem Strom und dem Drehmoment.

Aus den unterschiedlichen Phasen der Identifikationsfahrt können unterschiedliche Modell-Parameter hergeleitet werden. Beispielsweise gibt eine Fahrt mit konstanter Geschwindigkeit Aufschluss über die bei der betreffenden Achse vorhandene Reibung. Weiterhin gibt eine Fahrt mit konstanter Beschleunigung Aufschluss über die bei der betreffenden Achse vorhandene Gesamtträgheit. Dabei wird unter der Gesamtträgheit der Achse die Summe der (aller) Massen und Trägheitsmomente, die dem Antrieb der Achse bei einer Beschleunigung der Achse entgegenwirkt, verstanden.

Es ist bekannt, dass es eine Vielzahl an Möglichkeiten gibt, eine Maschine bzw. das Verhalten einer Maschine, insbesondere wenigstens einer Achse der Maschine, durch ein Modell zu beschreiben.

Bezüglich der Methoden der Modellbildung wird auf die umfangreiche Fachliteratur zu diesem Thema verwiesen. Eine gängige Methode sieht dabei vor, bekannte Zusammenhänge zwischen physikalischen Größen bei einer Vorrichtung, die durch Messungen bestimmt werden können, durch mathematische Terme zu beschreiben. Ziel der Modellbildung bei dieser Vorgehensweise ist es, die Parameter des Terms derart zu bestimmen, dass der Term die Messungen an der konkreten Vorrichtung möglichst gut widerspiegelt, das heißt z.B., dass die Abweichungen zwischen Messung und Term bei einer Vielzahl an der konkreten Vorrichtung durchgeführten Messungen im Mittel minimiert werden.

Eine in der Praxis häufig verwendete Möglichkeit der Modellbildung im Zusammenhang mit Antrieben sieht vor, das dem Antrieb einer Achse entgegengebrachte Drehmoment $M_{Phys}$ durch folgende Gleichung zu beschreiben:

$$M_{Phys} = J \cdot a_{Mot} + M_c \cdot \operatorname{sgn} n_{Mot} + M_v \cdot n_{Mot} + M_h$$

Dabei sind: $J$ die Gesamtträgheit, $M_c$ die Coulombsche Reibung, $M_v$ die Viskose Reibung, $M_h$ das Haltemoment, z.B. einer hängenden Achse, $a_{Mot}$ die Motor-Beschleunigung und $n_{Mot}$ die MotorDrehzahl.

Der durch obige Beziehung der physikalischen Größen gegebene Zusammenhang kann - sofern Werte für die darin enthaltenen Parameter vorliegen - als Mechanik-Modell der Achse bezeichnet werden.

Ähnliche Terme können für die Verluste des Antriebs oder die Strom- bzw. Drehmoment-Grenze des Antriebs in Abhängigkeit der Drehzahl angegeben werden, woraus sich - für den konkreten Antrieb - ein Verlustmodell oder ein Grenzmodell ableiten lassen.

Zu den Modell-Parametern des Mechanik-Modells, die aus den Identifikationsfahrten mittels der genannten Messungen für die einzelnen Achsen ermittelt werden, gehören: die bei dem Antrieb vorhandene Reibung (viskose / trockene Reibung), das Sättigungsverhalten des Motors (ergibt sich aus dem Zusammenhang zwischen Drehmoment bildendem Strom und dem physikalischen Drehmoment), Kräfte durch Gewichtskraft oder durch Gewichtsausgleich (beispielsweise bei hängender Achse), die tatsächliche Trägheit der Achse (ggf. Korrektur der vorher angenommenen Trägheit) oder das Feldschwächungsverhalten des Motors.

Anhand des Modells bzw. der Modell-Parameter können anschließend die maximale Beschleunigung $a_{max}$ oder der maximale Ruck $j_{max}$ - ggf. in Abhängigkeit einer Last oder Beladung der Achse - für den betreffenden Antrieb der Achse und für einen konkret vorgegebenen Verfahrweg der Achse derart bestimmt werden, dass damit die physikalischen Möglichkeiten des Motors bzw. des Antriebs voll ausgeschöpft werden. Insbesondere ist dabei $a_{max}$ bzw. $j_{max}$ abhängig von der während des Verfahrens der Achse über den Verfahrweg erreichbaren Höchstdrehzahl des Motors.

Bei einer Ausführungsform der Erfindung wird das Fahrprofil zumindest in einem Abschnitt der Identifikationsfahrt so bestimmt, dass die Achse 60%, vorzugsweise 50% der maximalen Verfahrgeschwindigkeit und/oder 60%, vorzugsweise 50% der maximalen Beschleunigung für die Identifikationsfahrt nicht überschreitet. Dadurch wird die oben beschriebene Fahrt mit mittlerer Geschwindigkeit und/oder mittlerer Beschleunigung realisiert.

Bei einer Ausführungsform der Erfindung wird das Fahrprofil zumindest in einem Abschnitt der Identifikationsfahrt so bestimmt, dass die Achse 70%, vorzugsweise 80% der maximalen Verfahrgeschwindigkeit und/oder 70%, vorzugsweise 80% der maximalen Beschleunigung für die Identifikationsfahrt nicht unterschreitet. Durch wird die oben beschriebene Fahrt mit hoher Geschwindigkeit und/oder hoher Beschleunigung realisiert.

Eine Ausführungsform der Erfindung sieht vor, dass neben den Randbedingungen maximaler Verfahrweg, maximale Geschwindigkeit, maximale Beschleunigung und maximaler Ruck für die Identifikationsfahrt als weitere Randbedingung ein maximales Trägheitsmoment der Achse für die Identifikationsfahrt in der Steuerung hinterlegt ist. Dies erweitert die Möglichkeiten bei der Bestimmung des Fahrprofils für die Identifikationsfahrt. Bei einer bevorzugten Ausführungsform ist das maximale Trägheitsmoment für die Identifikationsfahrt in Abhängigkeit von der Achsposition in der Steuereinrichtung hinterlegt. Das maximale Trägheitsmoment für die Identifikationsfahrt dient insbesondere dazu, in Verbindung mit den bekannten Antriebsdaten (maximaler Strom, maximales Drehmoment, Übersetzung etc.) die Dynamik-Parameter maximale Beschleunigung und/oder maximaler Ruck für die Identifikationsfahrt derart zu bestimmen, dass die Identifikationsfahrt sicher durchgeführt werden kann und insbesondere der Antrieb dabei nicht an seine Grenzen stößt.

Ziel der Identifikationsfahrt ist es, Modell-Parameter bzw. ein Modell der Fertigungsmaschine und insbesondere Modelle der Maschinenachsen zu bestimmen, auf die bei der Bestimmung von Trajektorien für den normalen Betrieb der Maschine zurückgegriffen werden kann. Zu diesen Modell-Parametern gehören die Reibung oder ein Trägheitsmoment der betreffenden Achse, ggf. auch in Abhängigkeit der jeweiligen Achsposition. Diese Parameter bestimmen das Mechanik-Modell der Achse bzw. der Maschine.

Weiterhin wird im Zusammenhang mit der Erfindung eine Stromgrenze in Abhängigkeit der Motordrehzahl für den Antrieb der jeweiligen Achse bestimmt. Diesen Zusammenhang beschreibt das sogenannte Grenzmodell des betreffenden Antriebs. Vorzugsweise wird das jeweilige Grenzmodell ebenfalls aus der entsprechenden Identifikationsfahrt ermittelt. Dabei werden zu einem gemessenen Stromwert aus dem Frequenzumrichter des Antriebs auch die zugehörige Motor-Drehzahl sowie der Abstand zum Maximalstrom bei der betreffenden Drehzahl ausgelesen und der Steuereinrichtung zugeführt. Dieser drehzahlabhängige Abstand zum Maximalstrom, die sogenannte "Reserve", ist eine gewöhnlich im Frequenzumrichter ohnehin vorhandene Größe, die daher nur aus dem Umrichter ausgelesen und der Steuereinrichtung zugeführt werden muss.

Alternativ können aber auch - sofern vorhanden - Datenblätter für die Bestimmung der Drehmoment- bzw. Strom-Grenze des jeweiligen Motors herangezogen werden. Die Grenzkennlinie des Motors (das Grenzmodell) kann so auch aus den Motordaten mittels eines Motormodells bestimmt werden oder auch direkt vom Motor-Hersteller geliefert werden.

Die Grenzkennlinie wird nicht nur durch den Motor selbst, sondern möglicherweise zusätzlich auch durch den maximalen Strom des Umrichters begrenzt, sowie durch das maximal erlaubte Drehmoment der Mechanik, wie z.B. des Getriebes. Diese Parameter müssen dann ggf. ebenso noch in die Grenzkennlinie einfließen, so dass sich insgesamt geringere maximal zulässige Motorströme in Abhängigkeit der Drehzahl ergeben können, als dies bei einer alleinigen Betrachtung des Motors der Fall wäre.

Außerdem kann ein Abschlagsfaktor (eine "Reserve") zur Sicherheit angegeben werden, wenn z.B. die Grenzkennlinie des Motors nur zu 90% ausgenutzt werden soll. Die gegenüber der Grenzkennlinie um die Reserve in negativer Drehmoment-Richtung verschobene Kennlinie kann als Reserve-Grenzkennlinie bezeichnet werden.

Eine Ausführungsform der Erfindung sieht vor, dass wenigstens ein die Verluste einer Achse bzw. des Antriebs der Achse betreffender Parameter bzw. eine entsprechende Kennlinie in einem Verlustmodell zusammengefasst in der Steuereinrichtung hinterlegt werden. Das Kriterium für das Verlustmodell ist die Minimierung der Verlustleistung, das bedeutet eine minimale Wärmeentwicklung des Motors. Dazu werden aus den während der Identifikationsfahrten gewonnenen Messdaten die Kupferund Eisenverluste des betreffenden Motors berechnet. Die Kupferverluste sind Strom- bzw. Drehmoment zum Quadrat abhängig, während die Eisenverluste drehzahlabhängig sind. Die so erhaltenen Kennlinien werden im weiteren Verlauf für energieoptimales Verfahren unter optimaler Ausnutzung der Motorleistung herangezogen. Die Ermittlung der Parameter des Verlustmodells beruht insbesondere auf der Messung des Motorstroms während der Identifikationsfahrt in den Bereichen des Fahrprofils mit hohen Geschwindigkeiten bzw. hohen Beschleunigungen, die eine hohe Belastung des Motors erzeugen. Dabei werden Sättigungseffekte erfasst, denn das Drehmoment ist bei hohen Strömen nicht mehr linear vom Strom abhängig. Typisch bei der Sättigungskennlinie ist: je höher der Strom, desto geringer wird die Zunahme des erzeugten Drehmoments mit zunehmendem Strom.

Die Erfindung ist nahezu bei jeder Fertigungsmaschine mit wenigstens einer lagegeregelten Achse anwendbar. Besonders vorteilhaft ist die Erfindung jedoch bei Fertigungsmaschinen mit mehreren mit jeweils einem lagegeregelten Antrieb versehenen Achsen, durch die jeweils wenigstens zwei Maschinenelemente relativ zueinander verstellbar sind, wobei mittels der Achsen ein Endeffektor der Fertigungsmaschine in einem Arbeitsraum der Fertigungsmaschine positionierbar ist und wobei in dem jeweiligen Modell die Parameter bzw. Kennlinien aller an der Positionierung des Endeffektors beteiligter Achsen der Fertigungsmaschinen hinterlegt sind.

Mit jeder zusätzlichen Achse erhöht sich der Aufwand bei der Inbetriebnahme der Maschine. Die Erfindung trägt dazu bei, diesen Aufwand, gerade bei Maschinen mit vielen Achsen, erheblich zu reduzieren.

Mittels der Erfindung können nach der Inbetriebnahme nicht nur Trajektorien für den (regulären, laufenden) Betrieb für die einzelnen Achsen der Maschine auf Basis des bzw. der identifizierten Modelle in optimierter Weise bestimmt werden, sondern auch Trajektorien für den Endeffektor, für dessen Bewegung im laufenden Betrieb der Maschine in der Regel mehrere Achsen im Verbund (interpolierend) verfahren werden. Auch hierbei werden die Trajektorien in Abhängigkeit wenigstens eines der erfindungsgemäß erzeugten Modelle bestimmt und optimiert.

Vorteilhaft können auch im Zusammenhang mit der Erfindung zur Glättung eines Fahrprofils, sowohl für die Identifikationsfahrt als auch für den (regulären, laufenden) Betrieb Lagesollwertfilter verwendet werden.

Die Erfindung trägt dazu bei, in einfacher Weise ModellParameter für die Antriebe einer Fertigungsmaschine zu bestimmen. Dabei stimmen die Modell-Parameter mit hoher Genauigkeit mit den Gegebenheiten an der realen Maschine überein.

Die Modell-Parameter werden anschließend dazu verwendet, optimierte Fahrprofile für den regulären (laufenden) Betrieb der Fertigungsmaschine zu bestimmen, so dass diese die von der Maschine auszuführende Aufgabe optimiert durchführt. Je nach Anforderung können so beispielsweise Zeit- oder Energieoptimierte Fahrprofile realisiert werden. Die Erzeugung der betreffenden Fahrprofile auf Basis eines Modells der Maschine bzw. auf Basis der Modell-Parameter ist dem Fachmann dabei aus dem Stand der Technik hinlänglich bekannt.

Zusammenfassend erhält man als Ergebnis des Identifikationsvorgangs ein Mechanik-Modell, was die Trägheits- und Reibverhältnisse der Achse beschreibt. Das identifizierte Grenzmodell beschreibt die elektrischen Grenzen der Antriebsachse, also Motorgrenzen mit Sättigung inklusive Grenzen des Leistungsteils. Das ermittelte Verlustmodell beschreibt im Wesentlichen die drehzahlabhängige Verlustleistung des Motors und bildet die Grundlage bei der weiteren Betrachtung von energieoptimalen Bewegungsvorgängen, um möglichst Ressourcen schonend zu verfahren.

Auf Basis der identifizierten Modelle sowie weiterer Eingangsgrößen, wie z.B. Verfahrweg und Beladung, werden anschließend für den normalen Betrieb der Maschine die Dynamik-parameter (Position, Geschwindigkeit, Beschleunigung, Ruck) beim Positionieren von Maschinenachsen zu verschiedenen Kriterien, wie z.B. Erreichen einer mit dem Antrieb maximal möglichen Beschleunigung, Verfahren der Achse in minimaler Zeit, für eine optimale Motorauslastung automatisch berechnet. Die Bestimmung von optimaler Beschleunigung, optimalem Ruck und ggf. weiterer Parameter kann für jeden belieben Betriebszustand im laufenden Betrieb der Maschine erfolgen, obwohl nur ein Identifikationsvorgang erfolgt ist.

Die bei der Identifikation ermittelten Modelle können auch für andere Berechnungen, Simulationen und Optimierungen sowohl an der realen Maschine als auch für den digitalen Zwilling herangezogen und benutzt werden.

Die Erfindung wird nachfolgend anhand von Ausführungsbeispielen näher erläutert. Dabei zeigen:

FIG 1        ein Werkzeugmaschinensystem mit einer numerisch gesteuerten Werkzeugmaschine,

FIG 2        Verfahrensschritte bei der Durchführung eines erfindungsgemäßen Verfahrens,

FIG 3 - 7    Drehmoment-Drehzahl-Diagramme,

FIG 8        ein Strom-Drehmoment-Diagramm,

FIG 9        ein Drehmoment-Drehzahl-Diagramm für eine Achse ohne Beladung und ohne Filter,

FIG 10       ein Drehmoment-Drehzahl-Diagramm für eine Achse ohne Beladung, mit Filter,

FIG 11       ein Drehmoment-Drehzahl-Diagramm für eine Achse mit Beladung und ohne Filter,

FIG 12       ein Drehmoment-Drehzahl-Diagramm für eine Achse mit Beladung und mit Filter und

FIG 13       Eine Identifikationsfahrt.

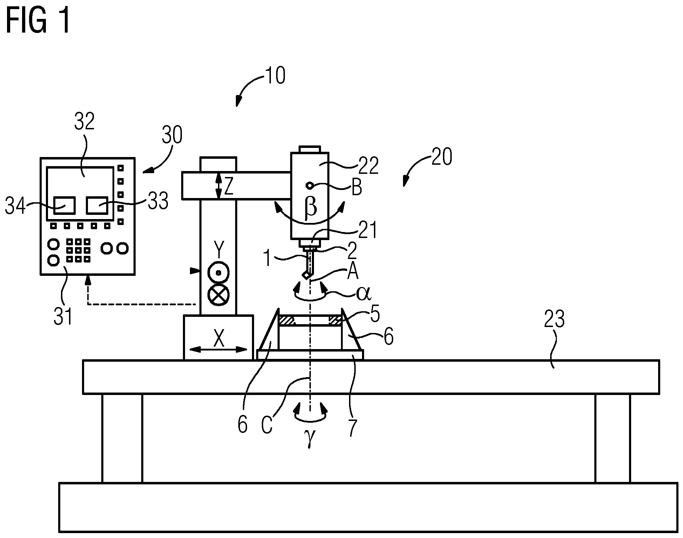

Figur 1 zeigt in schematischer Darstellung ein erfindungsgemäßes Fertigungsmaschinensystem in Form eines Werkzeugmaschinensystems 10 mit einer Fertigungsmaschine in Form einer Werkzeugmaschine 20 und einer damit verbundenen Steuereinrichtung in Form einer numerischen Steuerung bzw. CNC-Steuerung 30.

Die Werkzeugmaschine 20 verfügt im Rahmen des Ausführungsbeispiels über sechs Maschinenachsen, durch die eine Relativbewegung zwischen einem Werkzeug 1, das im Rahmen des Ausführungsbeispiels in Form eines Drehmeißels 1 vorliegt, und einem Werkstück 5, beispielsweise einem Ventilsitz eines Absperrventils, durchgeführt werden kann. Das Werkzeug 1 ist dabei in einen Werkzeughalter 2 eingespannt, der mit einer Werkzeugspindel 21 verbunden ist, die von einem lagegeregelten Motor 22 angetrieben wird. Das Werkstück 5 ist durch Spannmittel 6 an einem Werkstücktisch 7 befestigt.

Der Drehmeißel 1 lässt sich mit der im Ausführungsbeispiel gezeigten Werkzeugmaschine 20 mit der Übersichtlichkeit halber in Figur 1 nicht dargestellten Antrieben in X-, Y- und Z-Richtung lagegeregelt translatorisch bewegen. Neben den drei Linearachsen umfasst die gezeigte Werkzeugmaschine 20 ferner die beiden, ebenfalls aus Figur 1 ersichtlichen lagegeregelten Rundachsen A und B, mit denen das Werkzeug 1 um die jeweilige Achse gedreht und ebenfalls lagegeregelt durch die Winkellagen $\alpha$ und $\beta$ relativ zu dem Werkstück 5 ausgerichtet werden kann.

Darüber hinaus verfügt die Werkzeugmaschine 20 über eine dritte lagegeregelte Rundachse C, die parallel zur Z-Achse verläuft, und bezüglich der der Werkstücktisch 7 relativ zu einem ruhenden Maschinengestell 23 drehbar gelagert ist. Dadurch kann das Werkstück 5 auch in einer Winkellage $\gamma$ relativ zu dem Werkzeug 1 positioniert werden. Auch hier wurde der Übersichtlichkeit halber auf eine Darstellung des Antriebs verzichtet.

Abhängig von der durchzuführenden Bearbeitung ist bei der gezeigten Werkzeugmaschine 20 auch ein drehzahlgeregelter Betrieb bezüglich der Rundachsen A und/oder C möglich.

Die Werkzeugmaschine 20 gemäß dem Ausführungsbeispiel weist somit sechs Maschinenachsen (die 3 Linearachsen X, Y und Z sowie die 3 Rundachsen A, B und C) auf, d.h. es handelt sich um eine sogenannte 6-achsige Werkzeugmaschine (6-Achs-Maschine) 20.

Es sei an dieser Stelle angemerkt, dass die Werkzeugmaschine 20 selbstverständlich auch noch mehr, aber auch weniger als sechs Maschinenachsen aufweisen kann.

Die Werkzeugmaschine 20 ist mit der CNC-Steuerung 30 verbunden, die anhand eines Teileprogramms 33 und/oder einer Handbedieneingabe Lagesollwerte x, y, z, $\alpha$, $\beta$ und $\gamma$ zur Steuerung einer zwischen dem Werkzeug 1 und dem Werkstück 5 stattfindenden Relativbewegung ermittelt. Die CNC-Steuerung 30 ermittelt die Lagesollwerte anhand des Teileprogramms 33, in dem die vom Werkzeug 1 in Bezug zum Werkstück 5 durchzuführende Bewegung in Form von Befehlen definiert ist. Alternativ oder zusätzlich kann die Bewegung des Werkzeugs 1 und/oder das Werkstücks 5 auch mittels einer Handbedieneingabe über eine Bedieneinrichtung 31 in Verbindung mit einer Anzeigevorrichtung 32 der numerischen Steuerung 30 von einem Bediener vor Ort an der Werkzeugmaschine 20 vorgegeben werden. Die Bedieneinrichtung 31 weist hierzu insbesondere Eingabefelder, Tasten und Drehregler auf.

Das Teileprogramm 33 wird dabei üblicherweise von einem externen CAM/CAD-System (nicht dargestellt) und einem eventuell dem CAM/CAD-System nachgeschalteten sogenannten Postprozessor (nicht dargestellt) außerhalb der numerischen Steuerung 30 erzeugt und von dort auf die numerische Steuerung 30 übertragen.

Bei der Abarbeitung des Teileprogramms 33 erzeugt die numerische Steuerung 30 in einem bestimmten Takt, dem Interpolationstakt, sowohl Lagesollwerte x, y und z für die Linearachsen als auch $\alpha$, $\beta$ und $\gamma$ (Winkellagen) für die Rundachsen. Durch diese Lagesollwerte wird das Werkzeug 1 mit vorgegebener Orientierung relativ zu dem Werkstück 5 entlang einer Bewegungsbahn bewegt.

Ein Ziel der Erfindung ist es, in einfacher Weise ModellParameter für in der CNC-Steuerung 30 des Werkzeugmaschinensystems 10 hinterlegte Modelle der Fertigungsmaschine 20 zu identifizieren. Auf Basis dieser Modelle generiert die CNC-Steuerung 30 optimierte Trajektorien für die Bewegung des Werkzeuges 1 relativ zu dem Werkstück 5 zur Bearbeitung des Werkstücks 5.

Zum Identifizieren der Modell-Parameter verfügt die CNC-Steuerung 30 über ein Identifikations-Programm 34, auf Basis dessen nach dem Programm-Aufruf das nachfolgend beschriebene Verfahren ausgeführt wird.

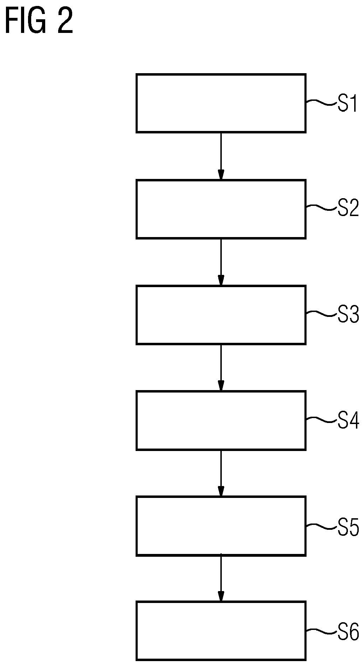

Figur 2 zeigt die wesentlichen Verfahrensschritte bei der erfindungsgemäßen Bestimmung einer optimierten Trajektorie für ein von der Werkzeugmaschine 20 geführtes Werkzeug 1 zur Bearbeitung eines Werkstücks 5. Dabei werden zunächst in einem Identifikationsvorgang Modell-Parameter für wenigstens ein in der CNC-Steuerung 30 hinterlegtes Modell der Werkzeugmaschine 20 bestimmt.

In einem ersten Verfahrensschritt (nachfolgend auch kurz "Schritt" genannt) S1 des erfindungsgemäßen Verfahrens werden bekannte Randbedingungen, das heißt bekannte Werte bestimmter Parameter, ermittelt bzw. in der CNC-Steuerung 30 bereitgestellt, die für das Verfahren benötigt werden. Dabei kann die Ermittlung automatisch, teilautomatisch oder manuell erfolgen. Automatisch bedeutet dabei, dass die CNC-Steuerung 30 selbst die betreffenden Parameter ermittelt. Dies gelingt beispielsweise dadurch, dass die CNC-Steuerung 30 nach dem Start eines auf der CNC-Steuerung 30 bereitgestellten Identifikations-Programmes 34 selbsttätig Achspositionen von Endschaltern der Achsen der Werkzeugmaschine 20 ausliest. Teil-automatisch kann bedeuten, dass die CNC-Steuerung 30 bei der Ausführung des Identifikations-Programmes zu bestimmten Zeitpunkten anhält und auf Benutzer-Eingaben wartet. Beispielsweise kann so die maximale Fahrgeschwindigkeit einer bestimmten Achse durch einen Benutzer manuell eingegeben werden. Weiterhin ist es auch möglich, dass einige bzw. alle die Randbedingungen betreffenden Parameter vor dem Start des Identifikations-Programmes manuell durch den Benutzer mittels der Bedienoberfläche in die CNC-Steuerung 30 eingegeben werden.

Zu den Randbedingungen, die zu Beginn des Identifikationsvorgangs in der CNC-Steuerung 30 vorliegen, gehören:

- die Positionen von Endschaltern der an der Bewegung des Werkzeugs beteiligten Achsen der Werkzeugmaschine 20,
- die maximale Fahrgeschwindigkeit der betreffenden Achsen, wobei es sich dabei im Fall von Rundachsen auch um Winkelgeschwindigkeiten handeln kann,
- eine Einschätzung der Trägheit, insbesondere die von dem jeweiligen Antrieb zu bewegende Masse bzw. das dem jeweiligen Antrieb entgegengebrachte Trägheitsmoment,
- bestimmte Umrichter-Parameter für die dem jeweiligen Antrieb zugeordneten Umrichter, insbesondere der dem jeweiligen Antrieb maximal zuführbare Strom.

Aus den genannten Randbedingungen generiert die CNC-Steuerung 30 bei der Ausführung des Identifikations-Programmes in einem Verfahrensschritt S2 für jede Maschinenachse einen maximalen Verfahrbereich, eine maximale Beschleunigung sowie ggf. einen maximalen Ruck für eine Identifikationsfahrt. Das heißt, bei diesen Maximalwerten für die Identifikationsfahrt handelt es sich nicht um die entsprechenden Maximalwerte der jeweiligen Parameter für den laufenden Betrieb, die in der Regel deutlich höher liegen, sondern um "sichere" Maximalwerte eigens für die Identifikationsfahrt, bei denen die Achse und insbesondere der Antrieb der Achse nicht an seine Grenzen stößt und dennoch die durch das erfindungsgemäße Verfahren zu ermittelnden Parameter mit hoher Genauigkeit ermittelt werden können.

Liegen die Randbedingungen sowie die weiteren, oben genannten Parameter für den Identifikationsvorgang vor, so ermittelt die CNC-Steuerung 30 in einem Verfahrensschritt S3 automatisch Identifikationsfahrten für die einzelnen Achsen. Dies bedeutet, es werden Fahrprofile für die einzelnen Achsen festgelegt, anhand derer die Achsen verfahren werden und bei denen die genannten Randbedingungen eingehalten werden. Weiterhin werden die Fahrprofile automatisch durch die CNC-Steuerung so bestimmt, dass zumindest in einem Abschnitt des Fahrprofils eine Fahrt und konstanter Geschwindigkeit und zumindest in einem Abschnitt eine beschleunigte Fahrt mit einer relativ hohen Beschleunigung, bei der insbesondere die maximale Beschleunigung für die Identifikationsfahrt zumindest näherungsweise erreicht wird, von dem Fahrprofil umfasst sind.

In einem nachfolgenden Verfahrensschritt S4 werden die Achsen gemäß den im Schritt 3 ermittelten Fahrprofilen verfahren und - während die Achsen verfahren werden - Messungen vorgenommen und Messwerte erzeugt, wobei aus den Messwerten nachfolgend in einem Verfahrensschritt S5 die gewünschten ModellParameter der Achsen auf Basis bekannter physikalischer Zusammenhänge bestimmt werden.

Bei einer bevorzugten Ausführungsform der Erfindung werden die Achsen gemäß den in Schritt 3 ermittelten Fahrprofilen einzeln nacheinander verfahren, vorzugsweise einmal mit mittlerer Geschwindigkeit und/oder mittlerer Beschleunigung sowie einmal mit hoher Geschwindigkeit und/oder hoher Beschleunigung, um alle möglichen Arbeitsbereiche der Maschinenachsen abzudecken und gute Modelle zu erhalten.

Die Identifikation dauert nur wenige Minuten und liefert ein sehr gutes Abbild der realen Maschinenachsen. Vorzugsweise ist das Fahrprofil für jede Achse so bestimmt, dass die Achse einmal in einer ersten Achsrichtung, z.B. der positiven Achsrichtung, mit der mittlerer Geschwindigkeit und mittlerer Beschleunigung verfahren wird und anschließend in der entgegengesetzten, das heißt der negativen Achsrichtung mit der hohen Geschwindigkeit und hohen Beschleunigung verfahren wird. Vorzugsweise wird die Achse dabei zumindest über einen wesentlichen Bereich ihres maximalen Verfahrweges, insbesondere den maximalen Verfahrweg verfahren.

Es ist jedoch auch möglich, dass die Fahrprofile in Schritt 3 derart bestimmt werden, dass während des Identifikationsvorgangs mehrere, insbesondere alle Maschinenachsen gleichzeitig verfahren werden. Es werden somit nicht Fahrprofile für die einzelnen Achsen für den Identifikationsvorgang generiert, sondern beispielswiese ein Fahrprofil für das Werkzeug 1 der Werkzeugmaschine 20, derart, dass an der entsprechenden Bewegung des Werkzeugs 1 alle Achsen der Werkzeugmaschine 20 beteiligt sind. Dadurch kann der Zeitaufwand für die Identifikationsfahrt wesentlich verkürzt werden. Im Gegenzug erhöht sich der Aufwand bei der Ermittlung eines Fahrprofils, das allen Achsen gemäß den geforderten Vorgaben gerecht wird.

Ziel der Messung in Schritt 4 ist es, einen Zusammenhang zwischen der Motordrehzahl des Antriebs und dem erzeugten Drehmoment zu bestimmen. Für eine sehr einfache Achse mit über den Verfahrbereich konstanten Reib- und Massenverhältnissen kann hier die Messung des Motorstromes in einigen wenigen Zeitpunkten während der Identifikationsfahrt ausreichend sein. In der Regel wird jedoch eine Vielzahl an Stromwerten über die gesamte Identifikationsfahrt verteilt gemessen, insbesondere in bestimmten Zeitintervallen, z.B. alle 2 ms, so dass letztendlich eine Kennlinie des Stromes bzw. des Drehmoments über der Drehzahl bestimmt wird.

Weiterhin wird zumindest bei einigen der gemessenen Stromwerte in Schritt 4 auch eine Stromgrenze ermittelt. Die Stromgrenze gibt den Maximalstrom des Antriebs bei der betreffenden Motordrehzahl an. Die Stromgrenze kann z.B. dadurch ermittelt werden, dass zu dem gemessenen Strom die "Strom-Reserve" aus dem Umrichter des Antriebs ausgelesen wird. Aus dem gemessenen Strom in Verbindung mit der Strom-Reserve ergibt sich so - in der Regel durch einfache Addition - die Stromgrenze. Da die Stromgrenze drehzahlabhängig ist, wird ihr Wert in Abhängigkeit der Motordrehzahl in der Steuerung gespeichert.

Zusätzlich oder alternativ zu der Stromgrenze kann auch eine Drehmoment-Grenze ermittelt werden. Da zumindest über einen großen Drehzahlbereich des Motors ein zumindest näherungsweise linearer Zusammenhang zwischen (Motor-) Strom und Drehmoment besteht, macht es in der Regel keinen Unterschied, welcher Wert gemessen wird. Ggf. lassen sich die Werte ineinander umrechnen.

Prinzipiell können auch Datenblätter, sofern vorhanden, für die Bestimmung der Drehmoment- bzw. Strom-Grenzen von Motor und Umrichter herangezogen werden. Die Grenzkennlinie des Motors kann so auch aus Motordaten mittels eines Motormodells berechnet werden oder auch direkt vom Hersteller des Motors geliefert werden.

Neben dem Motorstrom werden in Schritt 4 weiterhin auch Kinematik-Istgrößen für die Identifikationsfahrt ermittelt. Zu den Kinematik-Istgrößen gehören: die Position, die Geschwindigkeit, die Beschleunigung oder der Ruck. Vorzugsweise wird während der Identifikationsfahrt zumindest die Position der Achse in bestimmten Zeitintervallen, z.B. alle 2 ms, mittels eines Lagesensors gemessen. Andere Kinematik-Istgrößen können daraus bei Bedarf rechnerisch ermittelt werden, z.B. die Geschwindigkeit mittels einfacher Ableitung der Position nach der Zeit.

Alternativ ist es auch möglich, dass die benötigten Kinematik-Istgrößen ermittelt werden, indem sie aus den Vorgaben bzw. dem Fahrprofil für die Identifikationsfahrt entnommen und insofern als "wahr" angenommen werden. Sicherer ist jedoch eine messtechnische Ermittlung, womit auch eine Überprüfung der Vorgaben (Sollwerte) anhand eines Soll-Ist-Vergleichs möglich ist.

In dem Verfahrensschritt S5 werden aus den - insbesondere durch die genannten Messungen - gewonnenen Daten im Rahmen der Identifikation die gesuchten Modell-Parameter der Maschine bzw. die gesuchten Modelle, insbesondere das Mechanik-Modell und das Grenzmodell, gegebenenfalls auch das Verlustmodell, "identifiziert" bzw. ermittelt. Dabei wird auf an sich bekannte Verfahren zurückgegriffen. Die Modell-Parameter werden in Schritt 5 insbesondere auf Basis der während der Identifikationsfahrt für unterschiedliche Zeitpunkte ermittelten Ströme, Strom- bzw. Drehmomentgrenzen und Kinematik-Istgrößen bestimmt.

Auf die ermittelten Modelle wird weiter unten noch genauer eingegangen. Die Modelle werden schließlich in einem Verfahrensschritt S6 dazu verwendet, in an sich bekannter Weise optimierte Verfahrvorgänge, das heißt optimierte Trajektorien für die einzelnen Achsen bzw. den Endeffektor der Maschine zu erzeugen. Auch darauf wird später noch genauer eingegangen.

Die identifizierten Modelle können direkt an der Maschine, das heißt im Ausführungsbeispiel durch die CNC-Steuerung, zur Lageregelung der Achsen verwendet werden. Weiterhin kann auf die Modelle bzw. die davon umfassten Modell-Parameter auch bei der Bahnerzeugung in einem externen CAM-System zurückgegriffen werden. Weiterhin können die Modelle auch für realitätsnahe Simulationen von mittels der Maschine durchgeführten Bewegungsvorgängen (Werkstückbearbeitungen etc.) verwendet werden. Auch zur Erstellung eines digitalen Zwillings der Maschine sind die generierten Modell-Parameter bestens geeignet.

Das Mechanik-Modell umfasst Werte bezüglich der Massen und Trägheitsmomente für die einzelnen Achsen, bezüglich der Reibung und konstanter Kräfte, z.B. der Gewichtskraft. Es können zusätzliche Effekte modelliert werden, wie z.B. Prozesskräfte, Beschleunigungskräfte infolge eines schwingungsfähigen Systems, positionsabhängige Kräfte bei exzentrisch hängenden Achsen usw.

Insbesondere wird das Mechanik-Modell aus den Messwerten mittels eines "Modell-Fits" (Modellabgleichs) bestimmt. Hierfür kann auf zahlreiche, an sich bekannte mathematische Verfahren zurückgegriffen werden, wie z.B. auf einen Optimierungs-Algorithmus zur Minimierung der Abweichung des Modells von den Messdaten.

Unter dem Modell-Fit versteht man die Anwendung wenigstens eines an sich bekannten Algorithmus, der vor allem die Messdaten in bestimmter Weise glättet. Das liegt zu einem in der Modellannahme (wie z.B. enthaltener Reibung) und an der verwendeten Mathematik (z.B. Least Square Verfahren). Der Modell-Fit funktioniert hervorragend, solange die Messung in dem Sinn verrauscht ist, dass der Mittelwert in den Daten erhalten bleibt, wovon normalerweise auszugehen ist.

Wenige Messpunkte sind für den Modellabgleich ausreichend, solange genügend Informationen in den Messwerten enthalten sind, so dass jeder Aspekt des Modells gut abgedeckt wird. Eine hohe Beschleunigung ist z.B. erforderlich zur Ermittlung der Trägheit für das Mechanik-Modell und der Sättigung für das Verlustmodell. Eine hohe Geschwindigkeit ist z.B. erforderlich zur Bestimmung der Reibung für das Mechanik-Modell. Darauf wird bei der Auswahl des Fahrprofils bei der Identifikationsfahrt geachtet. Vorzugsweise werden zudem zwei MessFahrten, einmal mit mittlerer und einmal mit hoher Geschwindigkeit durchgeführt.

Das ermittelte Grenzmodell beschreibt die elektrische Grenze des Motors, vorzugsweise inclusive der Sättigung und der elektrischen Leistung des Umrichters. Dazu wird die Stromgrenze und/oder die Drehmoment-Grenze in Abhängigkeit der Drehzahl ausgewertet.

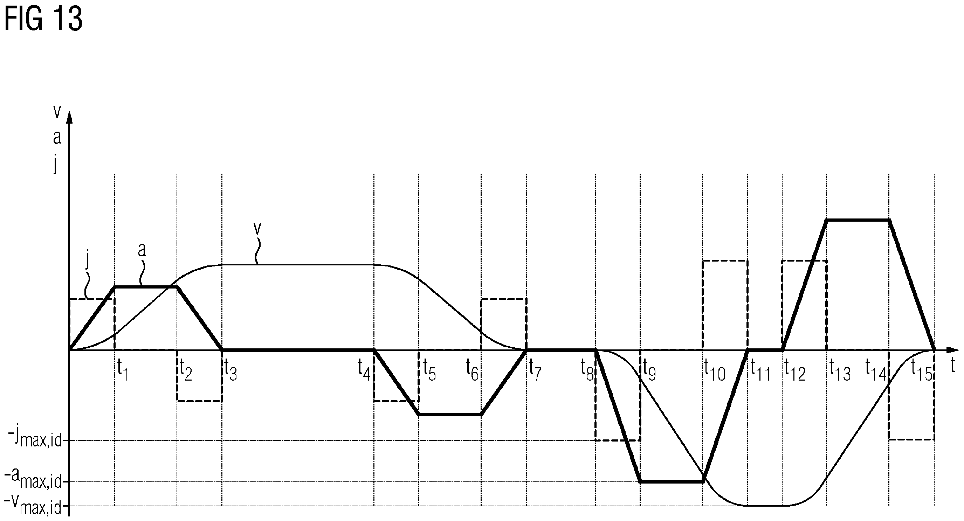

Eine beispielhafte Identifikationsfahrt wird anhand von Figur 13 veranschaulicht. Dabei sind für eine im Rahmen der Identifikationsfahrt zu verfahrende Maschinenachse folgende Randbedingungen vorgegeben:

- der maximale Fahrbereich der Achse für die Identifikationsfahrt, insbesondere die Positionen von Endschaltern der Achse, die generell den maximal möglichen Fahrbereich der Achse bestimmen,
- die maximale Fahrgeschwindigkeit $v_{max,\ id}$ der betreffenden Achsen für die Identifikationsfahrt,
- eine Einschätzung der Trägheit, insbesondere die von dem jeweiligen Antrieb zu bewegende Masse bzw. das dem jeweiligen Antrieb entgegengebrachte Trägheitsmoment,
- bestimmte Umrichter-Parameter für die dem jeweiligen Antrieb zugeordneten Umrichter, insbesondere der dem jeweiligen Antrieb maximal zuführbare Strom.

Auf Basis der genannten Randbedingungen generiert die CNC-Steuerung vorteilhaft automatisch bei der Ausführung des Identifikations-Programmes einen Verfahrbereich, eine maximale Beschleunigung $a_{max,\ id}$ sowie einen maximalen Ruck $j_{max,\ id}$ für die Identifikationsfahrt, wobei die Größen $a_{max,\ id}$ und $j_{max,\ id}$ so bestimmt werden, dass sie von dem Antrieb der Achse mit hoher Wahrscheinlichkeit erreicht werden können, ohne dabei den Antrieb an seine Grenzen zu bringen.

Liegen die Randbedingungen sowie die weiteren, oben genannten Parameter für den Identifikationsvorgang vor, so ermittelt die CNC-Steuerung automatisch ein Fahrprofil für die Achse, welches obige Bedingungen bzw. Randbedingungen einhält. Figur 13 veranschaulicht ein derartiges Fahrprofil und zeigt den zeitlichen Verlauf der Geschwindigkeit v, der Beschleunigung a und des Rucks j.

Bei dem beispielhaft gezeigten Fahrprofil wird die Achse in einem Zeitraum zwischen t=0 und $t_7$ mittlerer Beschleunigung und mittlerer Geschwindigkeit in positiver Achsrichtung von einer Position x=0 (nicht dargestellt) bis $x_{max}$ und in einem Zeitraum zwischen $t_8$ und $t_{15}$ mit maximaler Geschwindigkeit, maximaler Beschleunigung und maximalem Ruck, die Angaben (Maxima) beziehen sich jeweils auf die Identifikationsfahrt, wieder von $x_{max}$ bis x=0 zurück verfahren.

Im Einzelnen erfolgt zwischen t=0 und $t_3$ eine Beschleunigungs-Phase, und zwar zwischen t=0 und $t_1$ eine zunehmende Beschleunigung mit konstantem Ruck, von $t_1$ bis $t_2$ eine konstante Beschleunigung, zwischen $t_2$ und $t_3$ eine fallende Beschleunigung mit konstantem Ruck.

Von $t_3$ bis $t_4$ folgt ein Abschnitt mit konstanter Geschwindigkeit.

Zwischen $t_4$ und $t_7$ folgt eine Brems-Phase bis zum Stillstand der Achse, und zwar eine Beschleunigungs-Phase mit betragsmäßig zunehmender, negativer Beschleunigung zwischen $t_4$ und $t_5$, einer konstanten negativen Beschleunigung zwischen $t_5$ und $t_6$ und einer betragsmäßig abnehmenden, negativen Beschleunigung zwischen $t_6$ und $t_7$.

Zwischen den Zeitpunkten $t_7$ und $t_8$ befindet sich die Achse in Ruhe, bis bei $t_8$ die Fahrt in negativer Achsrichtung beginnt und solange andauert, bis die Achse in $t_{15}$ wieder ihre Ausgangslage (x=0) erreicht.

Die einzelnen Phasen zwischen $t_8$ und $t_{15}$ ergeben sich analog zu denen zwischen t=0 und $t_7$ aus der Figur, so dass im Einzelnen nicht mehr näher darauf eingegangen werden muss. Die Unterschiede zu dem ersten Zeitraum sind dadurch begründet, dass die Fahrt in umgekehrter Achsrichtung (Rückfahrt) erfolgt und hinsichtlich Geschwindigkeit, Beschleunigung und Ruck jeweils die für die Identifikationsfahrt bestimmten Maximalwerte $v_{max,\ id}$, $a_{max,\ id}$ und $j_{max,\ id}$ erreicht werden.

Während der gesamten Identifikationsfahrt wird vorteilhaft in kurzen zeitlichen Abständen, z.B. im Abstand von jeweils 2 ms, wenigstens die Achsposition gemessen. Aus den gemessenen Achspositionen lassen sich die Größen Geschwindigkeit, Beschleunigung und Ruck in dem jeweiligen Zeitpunkt durch Rechnung (Differentialrechnung) bestimmen. Alternativ könnten auch diese Größen mittels entsprechender Sensoren messtechnisch ermittelt werden.

Durch die Bestimmung der Größen Geschwindigkeit, Beschleunigung und Ruck kann überprüft werden, ob alle Vorgaben (z.B. die o.g. Maximalwerte) beim Verfahren der Achse auch tatsächlich eingehalten werden können. Sollte die Überprüfung, dass dies nicht der Fall ist, wird vorzugsweise eine Fehlermeldung an den Benutzer ausgegeben.

Weiterhin wird während der gesamten Identifikationsfahrt der Motorstrom gemessen, vorteilhaft ebenfalls in kurzen zeitlichen Abständen, z.B. im Abstand von jeweils 2 ms.

Aus den gemessenen Stromwerten in den unterschiedlichen Phasen der Identifikationsfahrt kann so auf Basis bekannter Zusammenhänge auf die gesuchten Modell-Parameter wie die Trägheit der Achse oder die Reibung geschlossen werden. Diese Größen sind damit "identifiziert".

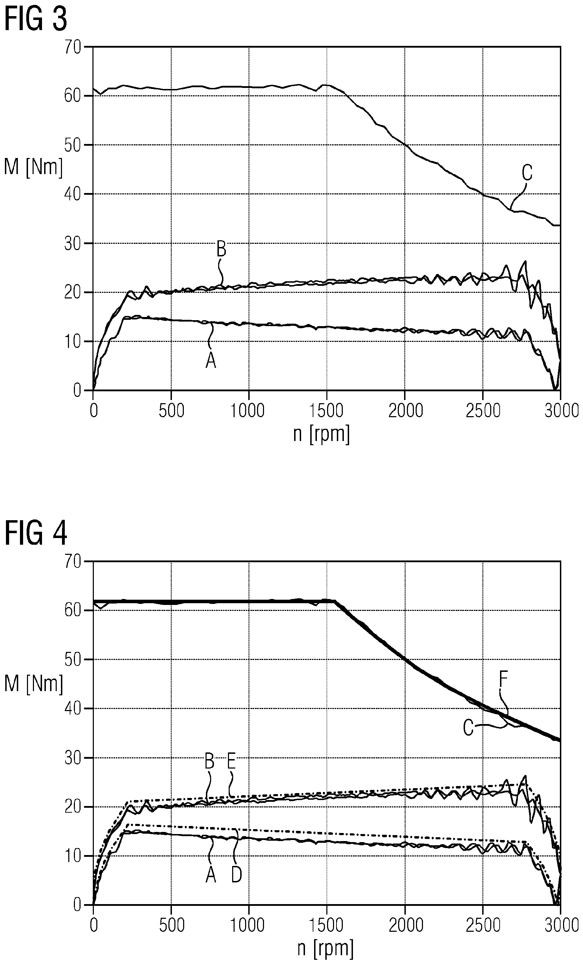

Die Figuren 3 bis 6 veranschaulichen die automatische Bestimmung der optimalen Beschleunigung für eine konkrete Maschinenachse. Dabei werden zunächst Messfahrten mit unterschiedlichen Beschleunigungen durchgeführt, bei denen ein großer, im Idealfall der gesamte relevante Drehzahlbereich des Motors durchlaufen wird. In Figur 3 dargestellt ist das Drehmoment über der Motordrehzahl sowie das Grenzmoment. Das Drehmoment kann entweder direkt am Antrieb mittels geeigneter Messmittel gemessen werden. Einfacher ist jedoch die Messung des Motor- bzw. Antriebsstroms während der Identifikationsfahrt. Die Stromwerte liegen im Umrichter des Antriebs in der Regel ohnehin vor. Diese müssen daher während der Identifikationsfahrt - vorzugsweise zu zeitdiskreten Zeitpunkten, z.B. im Abstand von 2 ms, ausgelesen werden. Es besteht ein - für den betreffenden Motor bekannter - linearer Zusammenhang zwischen dem momentenbildenden Motorstrom und dem erzeugten Drehmoment. So kann das in Figur 3 in den Messkurven A und B für unterschiedliche Beschleunigungen veranschaulichte Drehmoment direkt aus dem gemessenen Motorstrom bestimmt werden.

Ähnlich wie bei der Bestimmung des Drehmoments verhält es sich auch mit der Motor-Drehzahl. Auch hier liegen die gesuchten Werte in der Regel ohnehin bereits im Umrichter vor. Sofern an dem Motor ein entsprechender Drehzahl-Geber vorhanden ist, kann die Motordrehzahl in den betreffenden Zeitpunkten, in denen der Stromwert bestimmt wird, ausgelesen werden. Liegen die Drehzahlwerte nicht direkt vor, so können zu den Zeitpunkten, zu denen der Motorstrom ermittelt wird, die Positionswerte der Achse aufgezeichnet werden. Aus benachbarten Positionswerten lässt sich so mittels Differentiation die Fahrgeschwindigkeit der Achse und in Verbindung mit der Übersetzung des Antriebs die Motordrehzahl für die relevanten Zeitpunkte bestimmen. Aus der Kenntnis des Motorstroms bzw. des Drehmoments und der Drehzahl resultieren schließlich die aus Figur 3 ersichtlichen Messkurven A und B, die das MotorDrehmoment M (in Nm) in Abhängigkeit der Motor-Drehzahl n (in U/min bzw. in Englisch "rpm") zeigen. Die oberen Kurven B zeigen dabei eine Beschleunigung des Motors von 0 bis 3000 rpm und die unteren Kurven A ein Abbremsen von 3000 rpm auf 0 (Stillstand).

Ein genauer Blick auf Figur 3 und die Kurven A und B zeigt, dass jeweils 2 Kurven für A und B dargestellt sind. Diese resultieren aus 2 nacheinander unter gleichen Randbedingungen durchgeführten Messungen und zeigen eine hohe Wiederholgenauigkeit der Messungen, was wichtig für die Qualität der daraus ermittelten Modelle ist.

Die Kurve B (positive Beschleunigung der Achse) liegt oberhalb der Kurve A (negative Beschleunigung bzw. Abbremsen), da der Motor bei B gegen die Reibung der Achse arbeiten muss und bei A die Reibung das Abbremsen unterstützt.

Weiterhin kann - wie bereits erläutert - aus einem Datenblatt des Motors oder aus Umrichter-Daten die Kennlinie des maximalen Drehmoments (Grenzmoment) des Motors über der Drehzahl angegeben werden. Die entsprechende Grenzkennlinie C ist ebenfalls aus Figur 3 ersichtlich.

Insgesamt resultiert so das in Figur 3 veranschaulichte Diagramm aus einer Identifikationsfahrt, bei der der Motor jeweils in einem Drehzahlbereich zwischen 0 und 3000 U/min (rpm) unterschiedlich, einmal in einem Drehzahlbereich von ca. 250 rpm bis ca. 2750 rpm mit konstanter, positiver Beschleunigung (Messkurve B) und einmal in einem Drehzahlbereich von ca. 2750 rpm bis ca. 250 rpm mit konstanter, negativer Beschleunigung (Messkurve A) beschleunigt wird.

Aus den wie in Figur 3 veranschaulichten Messungen lassen sich dann in bereits beschriebener Weise Modellparameter wie die Trägheit der Achse ableiten.

Die glatten Kennlinien in Figur 4 veranschaulichen den Zusammenhang zwischen Motordrehzahl und Drehmoment, wenn man die gleiche Identifikationsfahrt wie in Figur 3 anhand des Modells simuliert. Im Unterschied zu den gemessenen, unregelmäßigen ("welligen") Messkurven A bis C ergeben sich so die "glatten" Kennlinien D bis F, die das Verhalten eines zu dem realen Motor korrespondierenden "Modell-Motors" mit idealem Verhalten - daher glatte Kennlinien - widerspiegeln.

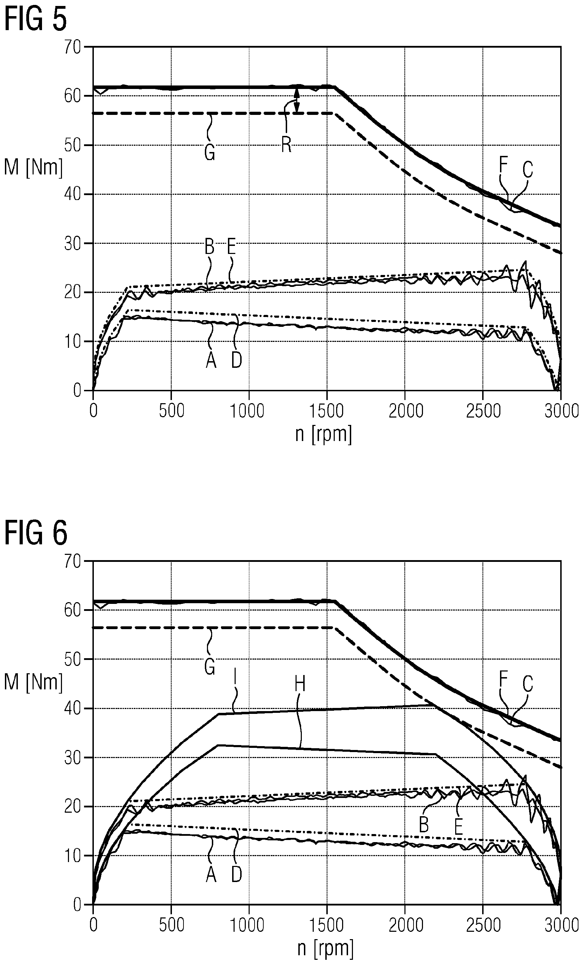

Figur 5 veranschaulicht die Motor-Grenzkennlinie F unter Berücksichtigung einer vom Anwender definierten "Reserve" R. Die Reserve-Kennlinie G ist im Ausführungsbeispiel gegenüber der Grenzkennlinie F um einen bestimmten Betrag, z.B. 5 Nm, nach unten verschoben. Die Bestimmung der "maximalen Beschleunigung" für den regulären Betrieb des Antriebs bzw. der Achse kann so auch unter Berücksichtigung eben dieser Reserve R erfolgen.

Figur 6 veranschaulicht nun die optimale Beschleunigung für die Achse, z.B. wenn man z.B. die Identifikationsfahrt (Beschleunigung des Motors von 0 rpm auf 3000 rpm und anschließendes Abbremsen des Motors von 3000 rpm auf 0 rpm) unter Einhaltung der Reserve in möglichst kurzer Zeit durchführen wollte. Dabei ist ersichtlich, dass für diesen Fall die Drehzahl-Drehmoment-Kennlinie I die Reserve-Kennlinie G gerade berührt. Die so anhand der erhaltenen Modelle bzw. ModellParameter ermittelte Kennlinie I schöpft demnach die Möglichkeiten des Antriebs (im Ausführungsbeispiel unter Berücksichtigung der Reserve R) voll aus.

Anhand der gemäß der Erfindung generierten Modelle lassen sich demnach, wie in Figur 6 veranschaulicht, optimierte Trajektorien für den regulären Betrieb des Antriebs ermitteln.

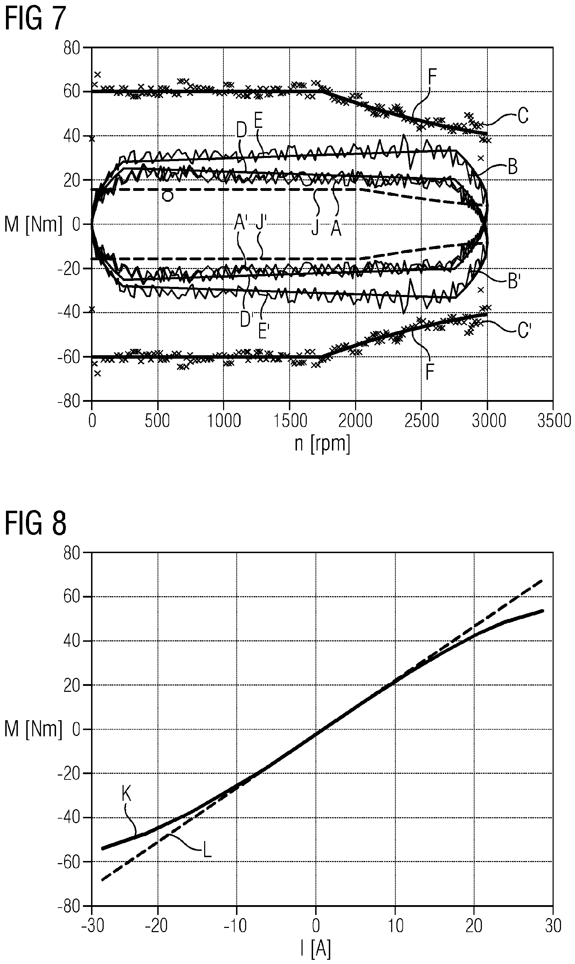

Figur 7 zeigt nochmals beispielhaft Drehmoment-Drehzahl-Diagramme des Motors einer Achse. Die welligen Kurven A und B im mittleren Bereich der Darstellung zeigen die aus Strom-Messungen resultierenden Kurven für das Drehmoment über der Drehzahl. Die glatten Kurven D und E zeigen auch hier im Vergleich zu den Messwerten die entsprechenden Kennlinien des identifizierten Modells der realen Achse.

Im Unterschied zu den Figuren 3 bis 6 zeigt Figur 7 auch negative Drehmoment-Werte. Diese rühren daher, dass die betreffende Achse mit analogem Fahrprofil (Beschleunigung von 0 rpm auf 3000 rpm und anschließendes Abbremsen auf 0 rpm) in negativer Achsrichtung verfahren wird, womit sich die Drehrichtung des Motors umkehrt. Aus den Strom- bzw. Drehmoment-Messungen resultieren so die Messkurven A' und B' sowie die entsprechenden, glatten Kurven D' und E' des Modells.

Wie aus Figur 7 ersichtlich ist, zeigt auch hier das Mechanik-Modell (glatte Kurven) mit den identifizierten Parametern eine sehr gute Übereinstimmung zur Realität (gemessene, "wellige" Kurven), was die Grundlage für alle weiteren Betrachtungen bildet.

Die in der Darstellung oberen und unteren welligen Kurven C und C' zeigen die gemessenen Werte des maximalen Drehmoments des Motors mit Sättigung und inclusive des Leistungsteils. Die glatten (durchgezogenen) Kurven F und F' sind die dazu korrespondierenden Grenzkennlinien des Grenzmodells der Antriebsachse. Die gestrichelten Kurven J und J' zeigen die sog. "S1-Kennlinien" der Achse, das heißt die Kennlinie des Antriebs für den für die Praxis beim Betrieb einer Werkzeugmaschine unrealistischen Fall eines stationären Betriebs mit dem ersichtlichen Drehmoment. Vorzugsweise geht die S1-Kennlinie aus einem Datenblatt des Motors der Achse hervor.

Zur Bestimmung eines Verlustmodells bedarf es der Messung von Stromwerten, die Sättigungseffekte berücksichtigen. Denn bei höheren Strömen steigen die Verluste und das erzeugte Drehmoment des Antriebs ist nicht mehr linear zum Strom. Figur 8 zeigt den Zusammenhang zwischen Strom I (in A) und Drehmoment M (in Nm) für einen Antrieb, woraus der Unterschied zwischen der realen gemessenen Kennlinie (durchgezogene Kennlinie K) und der idealen Kennlinie L (strichliert) ersichtlich ist.

Das Kriterium für das Verlustmodell ist die Minimierung der Verlustleistung, das bedeutet eine minimale Wärmentwicklung des Motors. Dazu werden aus den Messdaten die Kupfer- und Eisenverluste des Motors berechnet. Die Kupferverluste sind Strom- bzw. Drehmoment zum Quadrat abhängig, während die Eisenverluste drehzahlabhängig sind. Die so erhaltenen Kennlinien werden im weiteren Verlauf für energieoptimales Verfahren unter optimaler Ausnutzung der Motorleistung herangezogen.

Die Erfindung zeichnet sich dadurch aus, dass durch einige wenige Identifikationsfahrten Modell-Parameter bzw. Modelle der betreffenden Maschine generiert werden, auf deren Basis anschließend optimierte Fahrprofile für den regulären (laufenden) Betrieb der Maschine generiert werden können.

Über einen Optimierungsansatz wird ein optimiertes, insbesondere ein optimales Fahrprofil unter Berücksichtigung des Mechanik-Modells sowie der Drehmomenten-Drehzahl-Grenzkennlinie bestimmt, insbesondere berechnet. Ebenso könnte die Stromgrenze der Achse bei der Optimierung herangezogen werden.

Optimales Fahrprofil kann bedeuten:

- Maximale Beschleunigung für vorgegebenen Verfahrweg, max. Geschwindigkeit und Ruckbegrenzung;
- Minimale Verfahrzeit für vorgegebenen Verfahrweg und max. Geschwindigkeit;
- Minimale Stromverluste für vorgegebenen Verfahrweg und max. Geschwindigkeit.

Die Optimierung wird für eine vom Anwender weitgehend frei wählbare zusätzliche Beladung der Achse ermittelt. D.h. der Anwender kann das optimale Fahrprofil für unterschiedliche Beladungen, welche im Betrieb der Achse auftreten können, aber nicht vermessen wurden, berechnen und nutzen, um z.B. an der Steuerung eine Adaption einzurichten oder um auf den Worst-Case vorbereitet zu sein.

Auf Basis des Mechanik-Modells und dem gewünschten Fahrprofil wird ein erwarteter Drehmomentverlauf berechnet. Dieser darf in jedem Punkt die Grenz-Kennlinie nicht übersteigen. Im Fall eines erfindungsgemäß optimierten Fahrprofils berührt die Kurve des Drehmomentverlaufs in wenigstens einem Punkt die Grenz-Kennlinie.

Anstelle der Kennlinie für den maximalen Strom kann auch die Kennlinie für die Dauerbelastung (S1) als Grenze genutzt werden. In diesem Fall wird geprüft, ob ein thermisches Äquivalent des Fahrprofils (z.B. Effektivwert des erwarteten Drehmoments) unterhalb dieser S1 Kennlinie liegt.

Die Optimierung des Fahrprofils berücksichtigt auch den Einsatz von zusätzlichen Filtern auf der Steuerung, die das Fahrprofil glätten. Typisch sind z.B. Mittelwertbildner, VibX oder allgemeine FIR-Filter. Durch die Glättung ist üblicherweise eine Erhöhung der Beschleunigung möglich, da das Fahrprofil besser unter der Grenzkennlinie "hinwegtaucht".

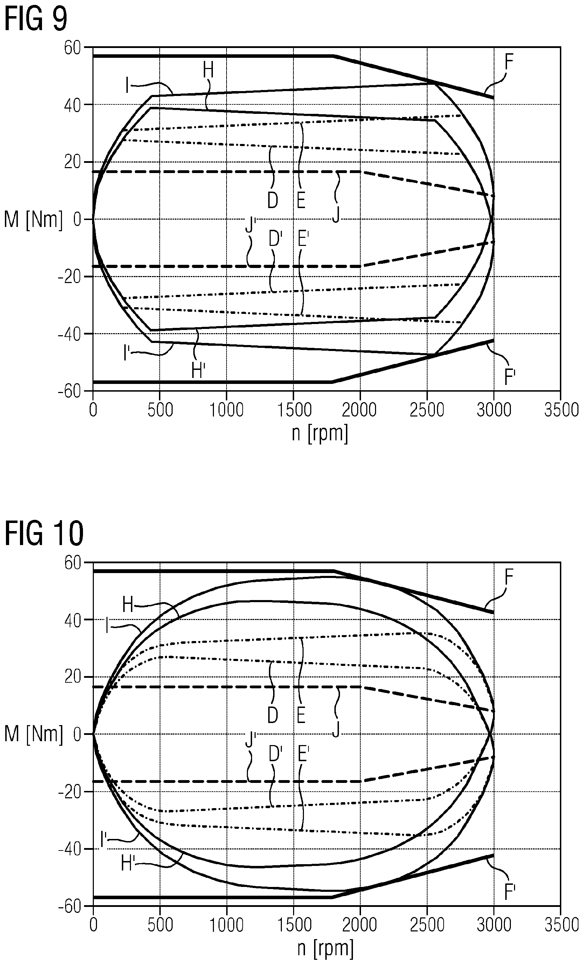

Beispiele für optimierte Fahrprofile zeigen die nachfolgend beschriebenen Figuren 9 bis 12. Dargestellt sind wieder die Drehmoment-Drehzahl-Diagramme für ein Fahrprofil, bei dem der Motor von 0 auf 3000 rpm beschleunigt und anschließend wieder auf 0 abgebremst wird, und zwar sowohl in positiver (obere Hälfte der Diagramme) als auch in negativer Drehrichtung (untere Hälfte der Diagramme) des Motors. Die durchgezogenen Kurven F und F' zeigen die Motorgrenzen, das heißt das Maximalmoment in Abhängigkeit der Drehzahl. Die gestrichelt gezeichneten Kennlinien J und J' zeigen die S1-Kennlinien (für die unterschiedlichen Drehrichtungen des Motors). Weitere Vorgaben für das dargestellte Ausführungsbeispiel sind: Fahrbereich s = 700mm, maximale Geschwindigkeit $v_{max}$ = 36m/min, maximaler Ruck $j_{max}$ = 100 m/s$^2$.

Die Kurven D und E bzw. D' und E' zeigen jeweils das Fahrprofil als Standard-Fall vor der Optimierung mit $a_{max}$ = 3,0 m/s$^2$.

Für das gezeigte Fahrprofil wurde anschließend eine Optimierung mit dem Kriterium "maximale Beschleunigung" durchgeführt.

Die Kurven H und I bzw. H' und I' zeigen das Ergebnis der Optimierung, bei der die Drehzahl-Drehmoment-Kennlinie I und I' die Grenzkennlinien F bzw. F' gerade berühren, die physikalischen Möglichkeiten des Motors also voll ausgeschöpft werden und jeweils in einem Betriebszustand das maximale Drehmoment des Motors abgerufen wird, was einer maximalen Beschleunigung bei dieser Motor-Drehzahl entspricht.

Figur 9 verdeutlicht den Fall ohne Beladung und ohne Filter. Hier kann für das Ausführungsbeispiel eine optimierte Beschleunigung $a_{max,opt}$ = 4,17 m/s$^2$ erreicht werden.

Wie deutlich zu erkennen ist, liegen die Drehzahl-Drehmoment-Kennlinien I bzw. I' in jeweils einem Punkt direkt an den Grenzkennlinien F bzw. F' an, dem maximal möglichen Motormoment in Abhängigkeit der Drehzahl. Demzufolge wird die Motorleistung maximal ausgenutzt.

Zum Erreichen des Optimums gibt es verschiedene mathematische Ansätze. Ein einfach zu realisierender und für die Praxis relevanter Ansatz besteht darin, den Motorstrom bzw. das Drehmoment bzw. die Beschleunigung stufenweise in kleinen Schritten solange zu erhöhen und anhand des Mechanik-Modells die entsprechenden Kurven zu erzeugen, bis sich - wie in Figur 9 gezeigt, die Kurven I und F bzw. I' und F' berühren bzw. schneiden. Damit ist das Optimum bzgl. des Drehmoments und damit der Beschleunigung gefunden.

Figur 10 ist weitgehend analog zu Figur 9 mit dem Unterschied, dass dabei ein Filter in Form eines Mittelwertbildners mit t = 50 ms verwendet wurde. Dabei konnte für das Ausführungsbeispiel eine optimierte Beschleunigung $a_{max,opt}$ = 5, 14 m/s$^2$ erreicht werden.

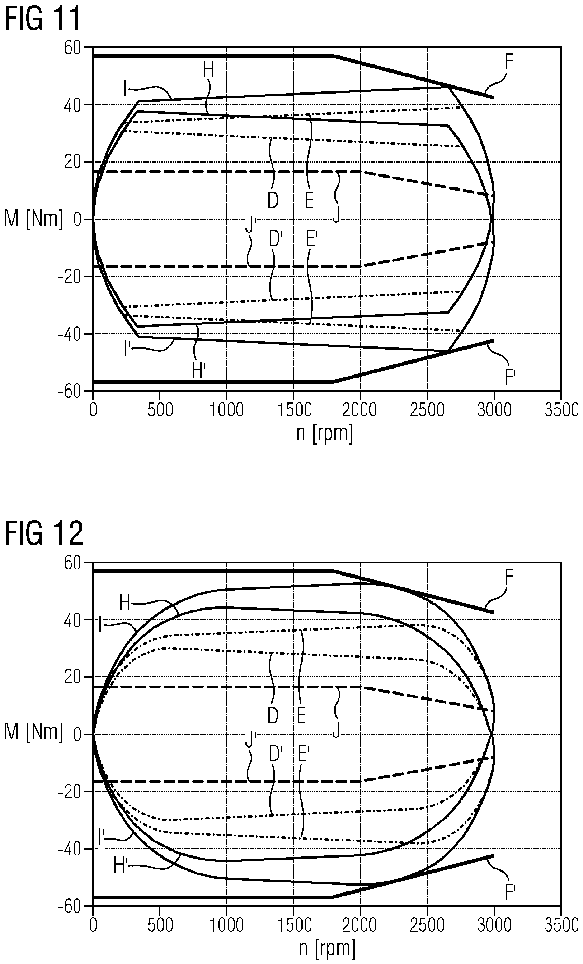

Figur 11 zeigt ein Ausführungsbeispiel, wieder weitgehend analog zu Figur 9 mit dem Unterschied, dass eine Beladung von 500 kg gewählt wurde. Für dieses Ausführungsbeispiel konnte ohne Filter eine optimierte Beschleunigung $a_{max,opt}$ = 3,66 m/s$^2$ erreicht werden.

Das Ausführungsbeispiel gemäß Figur 12 ist gegenüber dem gemäß Figur 11 dahingehend verändert, dass - zusätzlich zu der Beladung - ein Filter in Form eines Mittelwertbildners mit t = 50 ms verwendet wurde. Die optimierte Beschleunigung beträgt so $a_{max,opt}$ = 4,42 m/s$^2$.

Die optimierte maximale Beschleunigung liegt - wie aus den Figuren 11 und 12 ersichtlich - auch mit Beladung jeweils deutlich höher als im Ausgangszustand. Mit einem Mittelwertbildner als Filter (Figuren 10 und 12) erhöht sich die maximale Beschleunigung für dieses Fahrprofil noch einmal merklich.

Zusammenfassend zeichnet sich die Erfindung aus durch:

- Ein GUI (Graphical User Interface) geführtes Verfahren für Antriebsachsen von Fertigungsmaschinen jeglicher Art (z.B. Werkzeug-, Produktions- oder Handlingsmaschinen);
- "Smarte" Identifikation der Achseigenschaften zur optimalen Ausnutzung der Grenzkennlinie;
- Bestimmung der Parameter für eine sichere Identifikationsfahrt aus bekannten Randbedingungen der Antriebsachsen;
- Identifikationsfahrt der Antriebsachsen zur Bestimmung von Mechanik-Modell, Grenzmodell und ggf. Verlustmodel der Antriebsachsen, dazu:

    - Messtechnische Ermittlung von Reibung und Trägheit der Achse, Drehmomentgrenze des Motors inklusive Sättigung und Stromgrenze des Umrichters;
    - eine Identifikationsfahrt mit verrauschten Signalen und wenigen Abtastpunkten ist ausreichend, da durch den Algorithmus und die Optimierung trotzdem ein parametrisches Mechanik-Modell von hoher Qualität garantiert ist;
    - Berücksichtigung von mechanischen Grenzen (Drehmomentgrenze des Getriebes);
    - Berücksichtigung des Gewichtsausgleichs bei vertikalen Achsen;

- Anhand der identifizierten Modelle: Bestimmung der Dynamikparameter (maximale Beschleunigung $a_{max}$, (maximaler) Ruck $j_{max}$, Filter-Parameter) für Verfahrvorgänge zur optimalen Ausnutzung der Motorgrenzen für verschiedene Kriterien:

    - Maximale Beschleunigung ($a_{max}$, Filter-Parameter);
    - Minimale Zeit ($a_{max}$, $j_{max}$, Filter-Parameter) ;

- Energieeffizientes Verfahren (a, j);
- Dynamikoptimierung (Teileprogramm);

- Zur weiteren Glättung des Fahrprofils können Lagesollwertfilter berücksichtigt werden. Diese ermöglichen eine noch bessere Ausnutzung des vorhandenen Drehmomentes über einen großen Drehzahlbereich und damit letztendlich ein besseres Beschleunigungsvermögen für hohe Geschwindigkeiten;
- Die Berechnung ist für jede beliebige Konfiguration wiederholbar auf Basis der bereits durchgeführten Identifikation; die Konfigurationsänderungen betreffen:

  - jeden beliebigen Verfahrweg;
  - jede beliebige Dynamikgrenze (Beschleunigung, Ruck);
  - jede beliebige Beladung (wechselndes Werkstück);

Durch die Erfindung ergeben sich folgende Vorteile:

- Ausnutzung der maximal möglichen mechanischen und elektrischen Grenzen der Antriebsachse unter Berücksichtigung der beschriebenen Parameter;
- Optimale Performance zu verschiedenen Kriterien;
- Optimale Motorauslastung, besseres Motormanagement;
- Kürzere Bearbeitungszeiten;
- Erhöhung der Produktivität.

**Patentansprüche**

1. Verfahren zum Betrieb einer Fertigungsmaschine eines Fertigungsmaschinensystems, wobei die Fertigungsmaschine wenigstens eine Achse (X, Y, Z, A, B, C) mit einem lagegeregelten Antrieb aufweist, durch den wenigstens ein erstes Maschinenelement relativ zu einem zweiten Maschinenelement verstellbar ist, wobei einer von dem Fertigungsmaschinensystem umfassten Steuereinrichtung als Randbedingungen für mindestens eine Identifikationsfahrt wenigstens ein maximaler Verfahrbereich sowie eine maximale Verfahrgeschwindigkeit für die Achse (X, Y, Z, A, B, C) und eine maximale, dem Antrieb der Achse (X, Y, Z, A, B, C) zuführbare elektrische Leistung hinterlegt sind,
wobei mittels der Steuereinrichtung folgende Schritte ausgeführt werden:

    - Bestimmen oder Empfangen einer maximalen Beschleunigung ($a_{max,\,id}$) und/oder eines maximalen Rucks ($j_{max,\,id}$) für die Identifikationsfahrt,
    - Bestimmen eines Fahrprofils für die Identifikationsfahrt unter Einhaltung der Randbedingungen sowie der maximalen Beschleunigung ($a_{max,\,id}$) und des maximalen Rucks ($j_{max,\,id}$) für die Identifikationsfahrt,
    - Durchführen der Identifikationsfahrt gemäß dem ermittelten Fahrprofil,
    - Ermitteln eines dem Antrieb während der Identifikationsfahrt zugeführten Stroms (I),
    - Ermitteln einer Strom- und/oder einer Drehmomentgrenze des Antriebs in Abhängigkeit einer Drehzahl (n) des Antriebs,
    - Ermitteln wenigstens einer Kinematik-Istgröße während der Identifikationsfahrt,
    - Ermitteln wenigstens eines Modell-Parameters wenigstens eines Modells der Achse in Abhängigkeit des ermittelten Stroms (I) sowie der Kinematik-Istgröße,
    - Ermitteln wenigstens einer in Bezug auf eine minimale Fahrzeit oder eine maximale Beschleunigung oder eine minimale Verlustenergie optimierten Trajektorie der Achse (X, Y, Z, A, B, C) auf Basis des Modells.

2. Verfahren nach Anspruch 1, wobei der Modell-Parameter eine Trägheit der Achse, insbesondere eine Gesamtträgheit der Achse betrifft.

3. Verfahren nach Anspruch 1 oder 2, wobei der ModellParameter eine Reibung der Achse, insbesondere eine Coulombsche Reibung und/oder eine Viskose Reibung der Achse betrifft.

4. Verfahren nach einem der vorherigen Ansprüche, wobei das Fahrprofil für die Identifikationsfahrt wenigstens einen Abschnitt mit einer konstanten Geschwindigkeit und wenigstens einen Abschnitt mit einer Beschleunigung, insbesondere einer konstanten Beschleunigung umfasst.

5. Verfahren nach einem der vorherigen Ansprüche, wobei während der Identifikationsfahrt eine Position und/oder eine Geschwindigkeit und/oder eine Beschleunigung der Achse in Abhängigkeit der Zeit ermittelt wird bzw. werden und der Modell-Parameter in Abhängigkeit der ermittelten Position und/oder Geschwindigkeit und/oder Beschleunigung ermittelt wird.

6. Verfahren nach Anspruch 5, wobei während der Identifikationsfahrt eine Position und/oder eine Geschwindigkeit und/oder eine Beschleunigung der Achse in Abhängigkeit der Zeit gemessen wird bzw. werden und der Modell-Parameter in Abhängigkeit der ermittelten Position und/oder Geschwindigkeit und/oder Beschleunigung ermittelt wird.

7. Verfahren nach einem der vorherigen Ansprüche, wobei wenigstens eine die drehzahlabhängige, maximale Stromaufnahme des Antriebs der Achse betreffende Grenzkennlinie in einem Grenzmodell in der Steuereinrichtung hinterlegt wird.

8. Verfahren nach einem der vorherigen Ansprüche, wobei wenigstens eine die Verluste des Antriebs der Achse (X, Y, Z, A, B, C) in Abhängigkeit des Motorstroms betreffende Kennlinie in einem Verlustmodell in der Steuereinrichtung hinterlegt wird.

9. Verfahren nach einem der vorherigen Ansprüche, wobei eine hinsichtlich der Beschleunigung optimierte Trajektorie der Achse (X, Y, Z, A, B, C) derart bestimmt wird, dass eine Drehzahl-Drehmoment-Kennlinie des Antriebs der Achse (X, Y, Z, A, B, C) beim Verfahren der Achse (X, Y, Z, A, B, C) gemäß der Trajektorie die Drehmomentgrenze nicht überschreitet und in wenigstens einem Punkt berührt.

10. Verfahren nach einem der vorherigen Ansprüche, wobei die Fertigungsmaschine mehrere Achsen (X, Y, Z, A, B, C) mit jeweils einem lagegeregelten Antrieb aufweist, durch die jeweils wenigstens zwei Maschinenelemente relativ zueinander verstellbar sind, wobei mittels der Achsen (X, Y, Z, A, B, C) ein Endeffektor der Fertigungsmaschine in einem Arbeitsraum der Fertigungsmaschine positionierbar ist und wobei in dem jeweiligen Modell die Parameter bzw. Kennlinien aller an der Positionierung des Endeffektors beteiligter Achsen (X, Y, Z, A, B, C) der Fertigungsmaschinen hinterlegt sind.

11. Verfahren nach einem der vorherigen Ansprüche, wobei zur Glättung wenigstens eines optimierten Fahrprofils für den Betrieb der Fertigungsmaschine Lagesollwertfilter verwendet werden.

12. Fertigungsmaschinensystem zur Durchführung eines Verfahrens nach einem der Ansprüche 1 bis 11 zum Parametrieren eines Modells einer Fertigungsmaschine des Fertigungsmaschinensystems, wobei die Fertigungsmaschine wenigstens eine Achse (X, Y, Z, A, B, C) mit einem lagegeregelten Antrieb aufweist, durch den wenigstens ein erstes Maschinenelement relativ zu einem zweiten Maschinenelement verstellbar ist, wobei einer von dem Fertigungsmaschinensystem umfassten Steuereinrichtung als Randbedingungen für mindestens eine Identifikationsfahrt wenigstens ein maximaler Verfahrbereich sowie eine maximale Verfahrgeschwindigkeit für die Achse (X, Y, Z, A, B, C) und eine maximale, dem Antrieb der Achse (X, Y, Z, A, B, C) zuführbare elektrische Leistung hinterlegt sind,
wobei mittels der Steuereinrichtung folgende Schritte ausführbar sind:

- Bestimmen oder empfangen einer maximalen Beschleunigung und/oder eines maximalen Rucks für die Identifikationsfahrt,
- Bestimmen eines Fahrprofils für die Identifikationsfahrt unter Einhaltung der Randbedingungen sowie der maximalen Beschleunigung und des maximalen Rucks für die Identifikationsfahrt,
- Durchführen der Identifikationsfahrt gemäß dem ermittelten Fahrprofil,
- Ermitteln des dem Antrieb während der Identifikationsfahrt zugeführten Stroms (I),
- Ermitteln einer Strom- und/oder einer Drehmomentgrenze des Antriebs in Abhängigkeit einer Drehzahl des Antriebs,
- Ermitteln wenigstens einer Kinematik-Istgröße während der Identifikationsfahrt,
- Ermitteln wenigstens eines Modell-Parameters wenigstens eines Modells der Achse (X, Y, Z, A, B, C) in Abhängigkeit des ermittelten Stroms (I) sowie der Kinematik-Istgröße,
- Ermitteln wenigstens einer in Bezug auf eine minimale Fahrzeit oder eine maximale Beschleunigung oder eine minimale Verlustenergie optimierten Trajektorie der Achse (X, Y, Z, A, B, C) auf Basis des Modells.

13. Fertigungsmaschine für ein Fertigungsmaschinensystem nach Anspruch 12.

**14.** Steuereinrichtung für ein Fertigungsmaschinensystem nach Anspruch 12.

**15.** Digitaler Zwilling für eine Fertigungsmaschine nach Anspruch 13.

FIG 1

FIG 2

FIG 3

FIG 4

FIG 5

FIG 6

FIG 7

FIG 8

FIG 9

FIG 10

FIG 11

FIG 12

EP 4 130 902 A1

## FIG 13

Europäisches
Patentamt

European
Patent Office

Office européen
des brevets

**EUROPÄISCHER RECHERCHENBERICHT**

Nummer der Anmeldung

**EP 21 18 9898**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JIN JINGFU ET AL: "Parameter identification for industrial robots with a fast and robust trajectory design approach", ROBOTICS AND COMPUTER INTEGRATED MANUFACTURING., Bd. 31, 1. Februar 2015 (2015-02-01), Seiten 21-29, XP055878171, GB ISSN: 0736-5845, DOI: 10.1016/j.rcim.2014.06.004 * das ganze Dokument * ----- | 1-3,5,6, 10,12-15 | INV. G05B19/404 |
| A,D | EP 3 176 657 A1 (SIEMENS AG [DE]) 7. Juni 2017 (2017-06-07) * Absätze [0001], [0009] * ----- | 1-3,5,6, 10,12-15 | |

RECHERCHIERTE SACHGEBIETE (IPC)

G05B
B25J

~~Der vorliegende Recherchenbericht wurde für alle Patentansprüche erstellt~~

| Recherchenort | Abschlußdatum der Recherche | Prüfer |
|---|---|---|
| Den Haag | 14. Januar 2022 | Dörre, Thorsten |

EPO FORM 1503 03.82 (P04C03)

Europäisches
Patentamt

European
Patent Office

Office européen
des brevets

**Nummer der Anmeldung**

**EP 21 18 9898**

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

**Siehe Ergänzungsblatt B**

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**1-3, 5, 6, 10, 12-15**

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-3, 5, 6, 10, 12-15

    Modellbasierte Optimaltrajektorienbestimmung für eine Fertigungsmaschine, umfassend Modellparameteridentifikation mit Identifikationsfahrprofilbestimmung unter Randbedingungen, wobei als Modellparameter Trägheit und Reibung einer Achse bestimmt werden

    ---

2. Anspruch: 4

    Modellbasierte Optimaltrajektorienbestimmung für eine Fertigungsmaschine, umfassend Modellparameteridentifikation mit Identifikationsfahrprofilbestimmung unter Randbedingungen, wobei das Fahrprofil einen Abschnitt konstanter Geschwindigkeit und einen Abschnitt mit einer Beschleunigung umfasst

    ---

3. Anspruch: 8

    Modellbasierte Optimaltrajektorienbestimmung für eine Fertigungsmaschine, umfassend Modellparameteridentifikation mit Identifikationsfahrprofilbestimmung unter Randbedingungen, wobei ein Verlustmodell in der Steuereinrichtung hinterlegt wird

    ---

4. Ansprüche: 7, 9

    Modellbasierte Optimaltrajektorienbestimmung für eine Fertigungsmaschine, umfassend Modellparameteridentifikation mit Identifikationsfahrprofilbestimmung unter Randbedingungen, wobei die Trajektorie so bestimmt wird, dass eine Drehzahl-Drehmoment-Kennlinie des Achsantriebs beim Verfahren gemäß der Trajektorie eine Drehmomentgrenze nicht überschreitet und in wenigstens einem Punkt berührt

    ---

5. Anspruch: 11

    Modellbasierte Optimaltrajektorienbestimmung für eine Fertigungsmaschine, umfassend Modellparameteridentifikation mit Identifikationsfahrprofilbestimmung unter Randbedingungen, wobei zur Glättung eines Fahrprofils Lagesollwertfilter verwendet werden

    ---

**ANHANG ZUM EUROPÄISCHEN RECHERCHENBERICHT
ÜBER DIE EUROPÄISCHE PATENTANMELDUNG NR.**

EP 21 18 9898

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-01-2022

| Im Recherchenbericht angeführtes Patentdokument | Datum der Veröffentlichung | Mitglied(er) der Patentfamilie | Datum der Veröffentlichung |
|---|---|---|---|
| EP 3176657 A1 | 07-06-2017 | CN 108431704 A | 21-08-2018 |
| | | EP 3176657 A1 | 07-06-2017 |
| | | EP 3365737 A1 | 29-08-2018 |
| | | JP 6603805 B2 | 06-11-2019 |
| | | JP 2018536241 A | 06-12-2018 |
| | | US 2019018390 A1 | 17-01-2019 |
| | | WO 2017093109 A1 | 08-06-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3176657 A1